# EUROPEAN PATENT SPECIFICATION

(11) **EP 4 258 394 B1**
(45) Date of publication and mention of the grant of the patent: **29.04.2026**
(21) Application number: 21915745.0
(22) Date of filing: 28.12.2021
(51) Int. Cl.: H01M 8/04119, B01D 63/02

(54) **HUMIDIFIER FOR FUEL CELL**
BEFEUCHTER FÜR EINE BRENNSTOFFZELLE
HUMIDIFICATEUR POUR PILE À COMBUSTIBLE

(30) Priority: 31.12.2020 KR 20200188952; 31.12.2020 KR 20200188953
(43) Date of publication of application: 11.10.2023
(73) Proprietor: Kolon Industries, Inc., Seoul 07793 (KR)
(72) Inventor: KIM, Do Woo, Seoul 07793 (KR); YANG, Hyoung Mo, Seoul 07793 (KR); AHN, Woong Jeon, Seoul 07793 (KR); HER, Jungkun, Seoul 07793 (KR)
(74) Representative: Vossius & Partner Patentanwälte Rechtsanwälte mbB
(86) International application number: PCT/KR2021/020008
(87) International publication number: WO 2022/145947

(56) References cited:
- KR-A- 20180 048 003
- KR-A- 20190 081 736
- KR-A- 20200 122 211
- KR-A- 20200 122 211
- US-A1- 2007 246 847
- US-A1- 2010 068 603

## Description

### [TECHNICAL FIELD]

The present disclosure relates to a humidifier for fuel cells configured to supply humidified gas to a fuel cell.

### [Background Art]

A fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may generally be classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC).

These fuel cells are operated fundamentally by the same principle, but are different from each other in terms of the kind of fuel that is used, operating temperature, catalyst, and electrolyte. Among these fuel cells, the polymer electrolyte membrane fuel cell (PEMFC) is known as being the most favorable to a transportation system as well as smallscale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors in improving the performance of the polymer electrolyte membrane fuel cell (PEMFC) is to supply a predetermined amount or more of moisture to a polymer electrolyte membrane or a proton exchange membrane (PEM) of a membrane electrode assembly (MEA) in order to retain moisture content. The reason for this is that, if the polymer electrolyte membrane or the proton exchange membrane is dried, power generation efficiency is abruptly reduced.

1) A bubbler humidification method of filling a pressure-resistant container with water and allowing a target gas to pass through a diffuser in order to supply moisture, 2) a direct injection method of calculating the amount of moisture to be supplied that is necessary for fuel cell reaction and directly supplying moisture to a gas stream pipe through a solenoid valve, and 3) a membrane humidification method of supplying moisture to a gas fluid bed using a polymer separation membrane are used as methods of humidifying the polymer electrolyte membrane or the proton exchange membrane.

Among these methods, the membrane humidification method, which provides water vapor to air that is supplied to the polymer electrolyte membrane or the proton exchange membrane using a membrane configured to selectively transmit only water vapor included in off-gas in order to humidify the polymer electrolyte membrane or the proton exchange membrane, is advantageous in that it is possible to reduce the weight and size of a humidifier.

When a module is formed, a hollow fiber membrane having large transmission area per unit volume is suitable for a permselective membrane used in the membrane humidification method. That is, when a humidifier is manufactured using a hollow fiber membrane, high integration of the hollow fiber membrane having large contact surface area is possible, whereby it is possible to sufficiently humidify the fuel cell even at a small capacity, it is possible to use a low-priced material, and it is possible to collect moisture and heat included in off-gas discharged from the fuel cell at a high temperature and to reuse the collected moisture and heat through the humidifier.

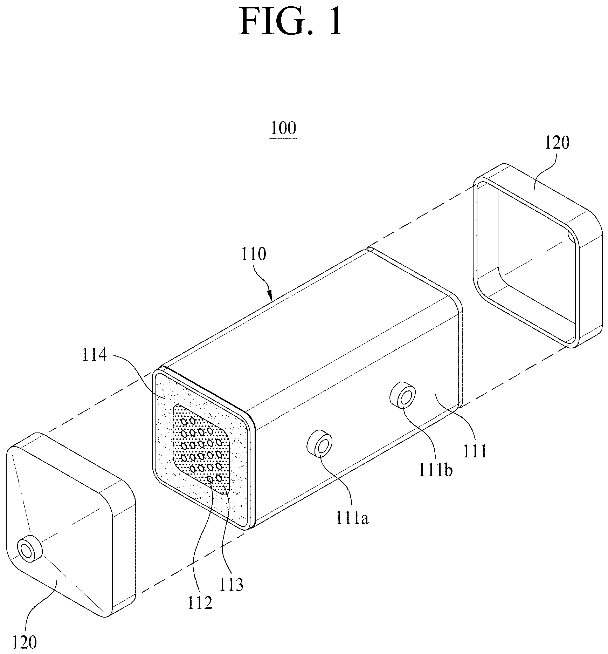

FIG. 1 is a schematic exploded perspective view of a conventional humidifier for fuel cells.

As illustrated in FIG. 1, a conventional membrane humidification type humidifier 100 includes a humidifying module 110, in which moisture exchange is performed between air supplied from the outside and off-gas discharged from a fuel cell stack (not shown), and caps 120 coupled respectively to opposite ends of the humidifying module 110.

One of the caps 120 transmits air supplied from the outside to the humidifying module 110, and the other cap transmits air humidified by the humidifying module 110 to the fuel cell stack.

The humidifying module 110 includes a mid-case 111 having an off-gas inlet 111a and an off-gas outlet 111b and a plurality of hollow fiber membranes 112 in the mid-case 111. Opposite ends of a bundle of hollow fiber membranes 112 are potted in hard potting portions 113. In general, each of the hard potting portions 113 is formed by hardening a liquid polymer, such as liquid polyurethane resin, using a casting method.

Air supplied from the outside flows along hollows of the hollow fiber membranes 112. Off-gas introduced into the mid-case 111 through the off-gas inlet 111a comes into contact with outer surfaces of the hollow fiber membranes 112 and is then discharged from the mid-case 111 through the off-gas outlet 111b. When the off-gas comes into contact with the outer surfaces of the hollow fiber membranes 112, moisture contained in the off-gas is transmitted through the hollow fiber membranes 112 to humidify air flowing along the hollows of the hollow fiber membranes 112.

In general, as illustrated in FIG. 1, the hard potting portions 113, in which ends of the hollow fiber membranes 112 are potted, and resin layers 114 between the hard potting portions 113 and the mid-case 111 isolate inner spaces of the caps 120 from an inner space of the mid-case 111. Similarly to the hard potting portions 113, each of the resin layers 114 is generally formed by hardening a liquid polymer, such as liquid polyurethane resin, using a casting method.

Since a casting process to form the resin layers 114 requires a relatively long process time, however, productivity of the humidifier 100 is deteriorated. KR 2020 0122211 A is related prior art and discloses a humidifier for a fuel cell which includes a humidification module for humidifying the air supplied from an outside with moisture in the exhaust gas discharged from a fuel cell stack, and a cap coupled to one end of the humidification module. The humidification module includes a mid-case, and at least one cartridge disposed in the mid-case and including a plurality of hollow fiber membranes. The humidifier for a fuel cell further includes a packing member hermetically coupled to one end of the humidification module through mechanical assembly so that the cap can be subject to fluid communication only with the hollow fiber membranes.

### [Disclosure]

### [Technical Problem]

The present disclosure has been made in view of the above problems, and it is an object of the present disclosure to provide a humidifier for fuel cells capable of preventing deterioration in productivity of a humidifier due to formation of resin layers through a casting process.

### [Technical Solution]

The present invention is defined by the features of claim 1. Further developments are defined by the features of the dependent claims.

### [Advantageous Effects]

According to the present disclosure, it is possible to achieve the following effects.

The present disclosure is implemented such that a casting process to form a hermetic seal between an inner space of a cap and an inner space of a mid-case is omitted. In the present disclosure, therefore, it is possible to improve productivity through reduction of a process time for production.

In the present disclosure, since the casting process is omitted, it is possible to hermetically seal a gap that may be formed around a cartridge, whereby it is possible to increase hermetic sealing force necessary to prevent direct mixing of dry gas and wet gas. In the present disclosure, therefore, it is possible to improve stability in a humidification process of humidifying dry gas.

In the present disclosure, a projection structure is implemented at a sealant, whereby it is possible to further secure the area of hermetic sealing through the sealant. In the present disclosure, therefore, it is possible to further increase hermetic sealing force by the sealant.

### [Description of Drawings]

FIG. 1 is a schematic exploded perspective view of a conventional humidifier for fuel cells.
FIG. 2 is a schematic exploded perspective view of a humidifier for fuel cells according to the present disclosure.
FIG. 3 is a schematic exploded sectional view showing the humidifier for fuel cells according to the present disclosure, taken along line I-I of FIG. 2.
FIG. 4 is a schematic coupled sectional view showing the humidifier for fuel cells according to the present disclosure, taken along line I-I of FIG. 2.
FIGs. 5 to 7 are schematic enlarged sectional views of part A of FIG. 4.
FIG. 8 is a partial side sectional view taken along line I-I of FIG. 2.
FIG. 9 is a schematic enlarged sectional view of part A of FIG. 4 shown to explain a reinforcement member according to the present disclosure.
FIG. 10 is a schematic exploded perspective view of an embodiment in which two cartridges are coupled to a mid-case in the humidifier for fuel cells according to the present disclosure.
FIG. 11 is a schematic exploded perspective view of an embodiment in which three cartridges are coupled to the mid-case in the humidifier for fuel cells according to the present disclosure.
FIG. 12 is a schematic exploded sectional view showing the humidifier for fuel cells according to the present disclosure, taken along line I-I of FIG. 2.
FIG. 13 is a schematic coupled sectional view showing the humidifier for fuel cells according to the present disclosure, taken along line I-I of FIG. 2.
FIG. 14 is a schematic enlarged sectional view of part B of FIG. 11.
FIG. 15 is a partial exploded section view showing a first packing member, a cartridge, and a first sealant before coupling, taken along line I-I of FIG. 2.
FIG. 16 is a schematic sectional view showing the first packing member before being coupled to the mid-case in the humidifier for fuel cells according to the present disclosure.
FIGs. 17 and 18 are schematic sectional views showing the first packing member coupled to the cartridge.
FIG. 19 is a schematic exploded perspective view of an embodiment in which two cartridges are coupled to the mid-case in the humidifier for fuel cells according to the present disclosure.
FIG. 20 is a schematic exploded perspective view of an embodiment in which three cartridges are coupled to the mid-case in the humidifier for fuel cells according to the present disclosure.

### [Best Mode]

Hereinafter, an embodiment of a humidifier for fuel cells according to the present disclosure will be described in detail with reference to the accompanying drawings.

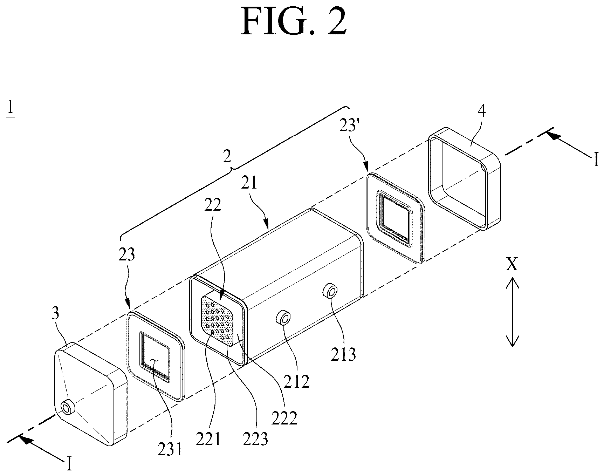

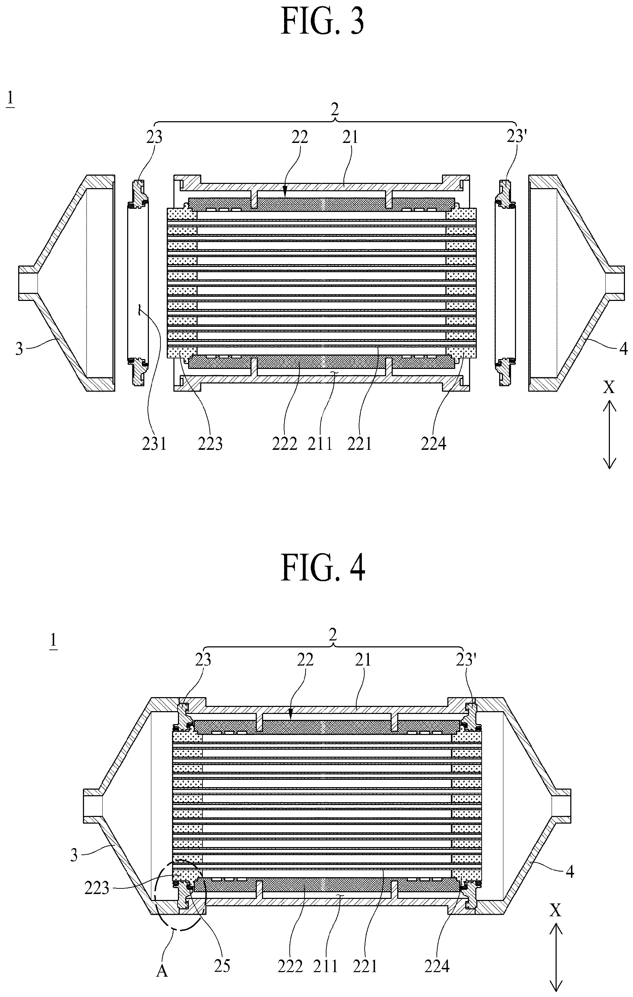

Referring to FIGs. 2 to 4, 10, and 11, a humidifier 1 for fuel cells according to the present disclosure is configured to humidify dry gas supplied from the outside using wet gas discharged from a fuel cell stack (not shown). The dry gas may be fuel gas or air. The dry gas may be humidified by the wet gas and may then be supplied to the fuel cell stack. The humidifier 1 for fuel cells according to the present disclosure includes a humidifying module 2 configured to humidify dry gas and a first cap 3 coupled to one end of the humidifying module 2. The humidifying module 2 includes a cartridge 22, to which a plurality of hollow fiber membranes 221 is coupled, a mid-case 21, to which the cartridge 22 is coupled, and a first packing member 23 disposed between the cartridge 22 and the mid-case 21 to form a hermetic seal between the cartridge 22 and the mid-case 21. The first packing member 23 may form the hermetic seal between the cartridge 22 and the mid-case 21 through coupling without a casting process. As a result, the first packing member 23 may hermetically seal an inner space IS of the first cap 3 and an inner space IS of the mid-case 21. In the humidifier 1 for fuel cells according to the present disclosure, therefore, it is possible to omit the casting process, which requires a relatively long process time, whereby it is possible to improve productivity through reduction of the process time for production.

Hereinafter, the humidifying module 2, the first cap 3, and a second cap 4 will be described in detail with reference to the accompanying drawings.

Referring to FIGs. 2 to 4, 10, and 11, the humidifying module 2 humidifies dry gas supplied from the outside. The humidifying module 2 may humidify dry gas supplied from the outside using wet gas discharged from the fuel cell stack. The first cap 3 may be coupled to one end of the humidifying module 2. A second cap 4 may be coupled to the other end of the humidifying module 2. The first cap 3 may transmit dry gas to the humidifying module 2. In this case, the second cap 4 may transmit dry gas humidified by wet gas in the humidifying module 2 to the fuel cell stack. The first cap 3 may transmit wet gas to the humidifying module 2. In this case, the second cap 4 may discharge wet gas to the outside after dry gas is humidified in the humidifying module 2.

The humidifying module 2 may include the cartridge 22, the mid-case 21, and the first packing member 23.

The cartridge 22 includes a plurality of hollow fiber membranes 221. The hollow fiber membranes 221 may be implemented as the cartridge 22 so as to be modularized. Consequently, the hollow fiber membranes 221 may be installed in the mid-case 21 through a process of coupling the cartridge 22 to the mid-case 21. In the humidifier 1 for fuel cells according to the present disclosure, therefore, ease in installation, separation, and replacement of the hollow fiber membranes 221 may be improved. The cartridge 22 may include an inner case 222 configured to receive the hollow fiber membranes 221. The hollow fiber membranes 221 may be disposed in the inner case 222 so as to be modularized. Each of the hollow fiber membranes 221 may include a polymer membrane made of polysulfone resin, polyethersulfone resin, sulfonated polysulfone resin, polyvinylidene fluoride (PVDF) resin, polyacrylonitrile (PAN) resin, polyimide resin, polyamide imide resin, polyester imide resin, or a mixture of two or more thereof.

The cartridge 22 may include a first potting layer 223 and a second potting layer 224. Ends of the plurality of hollow fiber membranes 221 are potted in the first potting layer 223 and the second potting layer 224, which close openings of the inner case 222. One end of each of the plurality of hollow fiber membranes 221 may be fixed by the first potting layer 223, and the other end of each of the plurality of hollow fiber membranes 221 may be fixed by the second potting layer 224. Each of the first potting layer 223 and the second potting layer 224 may be formed by hardening a liquid resin, such as liquid polyurethane resin, through the casting process. The first potting layer 223 and the second potting layer 224 may fix the ends of the plurality of hollow fiber membranes 221 to the inner case 222.

The first potting layer 223 and the second potting layer 224 may be formed so as not to block the hollows of the plurality of hollow fiber membranes 221. Consequently, dry gas or wet gas supplied from the outside may be supplied to the hollows of the hollow fiber membranes 221 without being disturbed by the first potting layer 223 and the second potting layer 224, and the dry gas or the wet gas may be discharged from the hollows of the hollow fiber membranes 221 without being disturbed by the first potting layer 223 and the second potting layer 224.

The cartridge 22 may include an introduction hole (not shown) and a discharge hole (not shown) formed in the inner case 222. The introduction hole may allow wet gas or dry gas to be introduced into the inner case 222 therethrough. The introduction hole may be formed through the inner case 222. The discharge hole may allow wet gas or dry gas to be discharged from the inner case 222 to the outside therethrough.

The cartridge 22 is coupled to the mid-case 21. The mid-case 21 may include a receiving hole 211 configured to receive the cartridge 22 therein. The receiving hole 211 may be disposed in the mid-case 21. The cartridge 22 may be inserted into the receiving hole 211 such that a space is defined between an inner surface of the mid-case 21 and an outer surface of the cartridge 22, whereby the cartridge may be disposed in the mid-case 21.

An inlet 212 and an outlet 213 may be formed at one side of the mid-case 21.

The inlet 212 may allow wet gas or dry gas to be introduced into the mid-case 21 therethrough. The outlet 213 may allow wet gas or dry gas to be discharged from the mid-case 21 therethrough. The inlet 212, the outlet 213, and the mid-case 21 may be integrally formed.

When wet gas flows through the inlet 212 and the outlet 213, the wet gas may be supplied to a space between the inner surface of the mid-case 21 and an outer surface of the inner case 222 through the inlet 212, may be supplied into the inner case 222 through the introduction hole, and may come into contact with outer surfaces of the hollow fiber membranes 221. During this process, moisture contained in the wet gas may be transmitted through the hollow fiber membranes 221, whereby dry gas flowing along the hollows of the hollow fiber membranes 221 may be humidified. The humidified dry gas may be discharged from the hollow fiber membranes 221 and may then be supplied to the fuel cell stack through the second cap 4. After humidifying the dry gas, the wet gas may be discharged into the space between the outer surface of the inner case 222 and the inner surface of the mid-case 21 through the discharge hole and may then be discharged from the mid-case 21 through the outlet 213. The inlet 212 may be connected to the fuel cell stack such that wet gas is supplied thereto. In this case, the wet gas may be off-gas discharged from the fuel cell stack.

When dry gas flows through the inlet 212 and the outlet 213, the dry gas may be supplied to the space between the inner surface of the mid-case 21 and the outer surface of the inner case 222 through the inlet 212, may be supplied into the inner case 222 through the introduction hole, and may come into contact with the outer surfaces of the hollow fiber membranes 221. During this process, moisture contained in wet gas may be transmitted through the hollow fiber membranes 221, whereby the dry gas introduced into the inner case 222 may be humidified. The humidified dry gas may be discharged into the space between the outer surface of the inner case 222 and the inner surface of the mid-case 21 through the discharge hole, may be discharged from the mid-case 21 through the outlet 213, and may be supplied to the fuel cell stack. After humidifying the dry gas, the wet gas may be discharged from the hollow fiber membranes 221 and may then be discharged to the outside through the second cap 4. The first cap 3 may be connected to the fuel cell stack such that wet gas is supplied thereto. In this case, the wet gas may be off-gas discharged from the fuel cell stack.

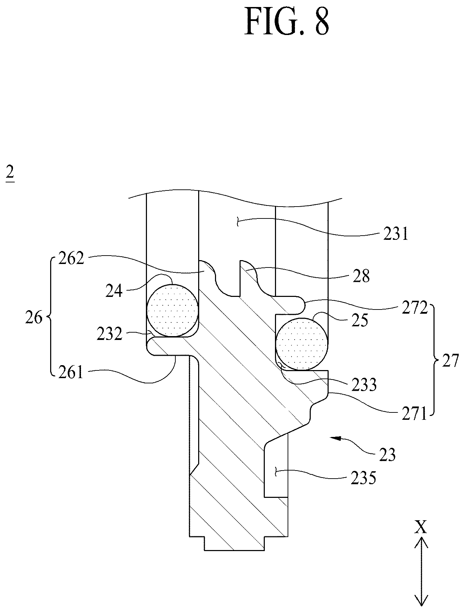

Referring to FIGs. 2 to 20, the first packing member 23 forms the hermetic seal between the cartridge 22 and the mid-case 21. The first packing member 23 may prevent direct mixing of dry gas and wet gas. The first packing member 23 may be disposed between the cartridge 22 and the mid-case 21. In this case, the cartridge 22 may be inserted into a first through-hole 231 formed in the first packing member 23. The first packing member 23 may brought into tight contact with the cartridge 22 in order to form the hermetic seal between the cartridge 22 and the mid-case 21. In this case, the size of the cartridge 22 may be formed so as to be greater than the size of the first through-hole 231. As a result, the cartridge 22 may be inserted into the first through-hole 231 by interference fitting. The first packing member 23 may be made of an elastically deformable material. For example, the first packing member 23 may be made of rubber. The first packing member 23 may be formed in a ring shape so as to form the hermetic seal between the cartridge 22 and the mid-case 21; however, the present disclosure is not limited thereto, and the first packing member 23 may be formed in any of other shapes as long as it is possible to form the hermetic seal between the cartridge 22 and the mid-case 21.

Here, the humidifier 1 for fuel cells according to the present disclosure may include various embodiments of a structure that forms the hermetic seal between the cartridge 22 and the mid-case 21. Hereinafter, the embodiments of the structure that forms the hermetic seal between the cartridge 22 and the mid-case 21 will be described in detail with reference to the accompanying drawings.

### <Humidifier for fuel cells according to first embodiment>

Referring to FIGs. 2 to 11, a humidifier 1 for fuel cells according to a first embodiment may include a first sealing portion 240 and a first blocking portion 260.

The first sealing portion 240 forms a hermetic seal between the first packing member 23 and the first potting layer 223. The sealing portion 240 may be disposed in at least one of a first outer space OS between the first packing member 23 and the first cap 3 based on the first packing member 23 and an inner space IS disposed on the side opposite the first outer space OS.

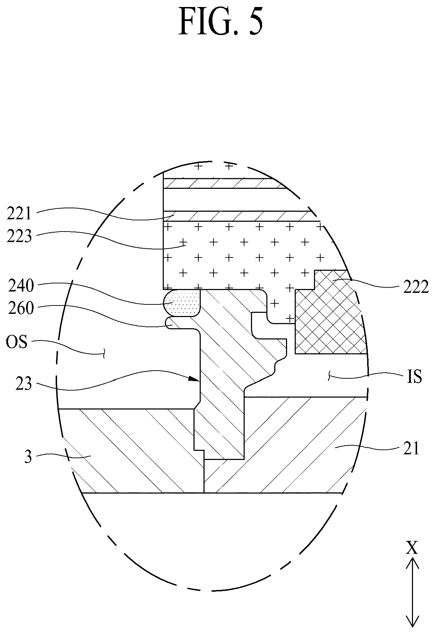

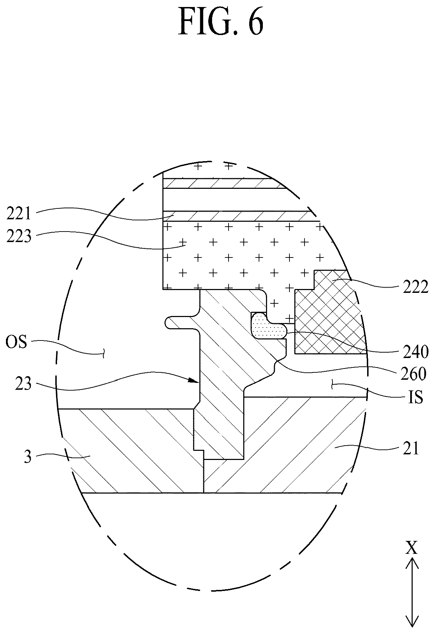

For example, as shown in FIG. 5, the first sealing portion 240 may be disposed in the first outer space OS to form the hermetic seal between the first packing member 23 and the first potting layer 223. For example, as shown in FIG. 6, the first sealing portion 240 may be disposed in the inner space IS to form the hermetic seal between the first packing member 23 and the first potting layer 223. The first sealing portion 240 may be disposed in both the outer space OS and the inner space IS to form the hermetic seal between the first packing member 23 and the first potting layer 223 in each of the outer space OS and the inner space IS.

In the humidifier 1 for fuel cells according to the first embodiment, therefore, it is possible to improve ease in manufacturing a structure that forms a hermetic seal between the first cap 3 and the first potting layer 223 such that the first cap 3 can fluidly communicate with only the hollow fiber membranes 221 through an assembly structure between the first packing member 23 and the first potting layer 223, and additionally it is possible to prevent movement of a fluid into a gap defined between the first packing member 23 and the first potting layer 223 through the first sealing portion 240, whereby it is possible to improve airtightness in the structure that forms the hermetic seal between the first cap 3 and the first potting layer 223. The sealing portion 240, which is made of a liquid resin selected from the group consisting of liquid polyurethane resin, liquid silicone resin, liquid epoxy resin, liquid elastomer resin, and a combination thereof, may be applied to the first packing member 23 and may be hardened after the first packing member 23 is disposed between the cartridge 22 and the mid-case 21 in order to form the hermetic seal between the first potting layer 223 and the first packing member 23. After the first packing member 23 is disposed between the cartridge 22 and the mid-case 21, the sealing portion 240 may be applied and hardened so as to fill the gap between the first potting layer 223 and the first packing member 23 in order to form the hermetic seal between the cartridge 22 and the mid-case 21.

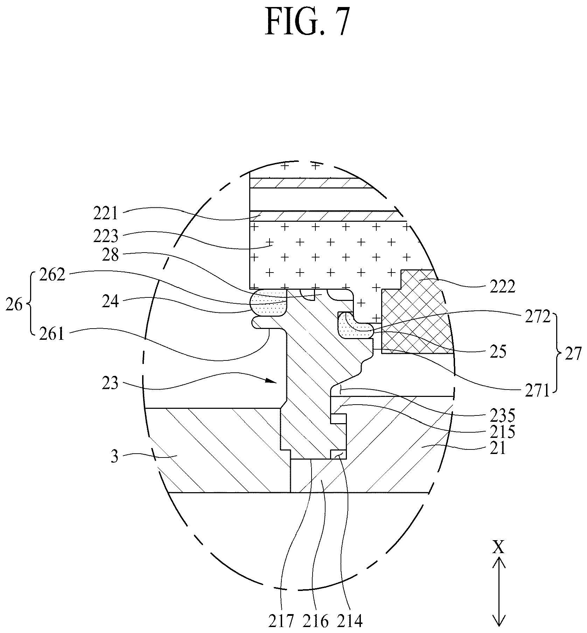

Referring to FIGs. 5 and 7, when the first sealing portion 240 is implemented so as to be disposed in the first outer space OS, the first sealing portion 240 may include a first outer sealant 24.

The first outer sealant 24 forms the hermetic seal between the first potting layer 223 and the first packing member 23 in the first outer space OS. The first outer sealant 24 may form the hermetic seal between the first packing member 23 and the first potting layer 223 in the outer space OS. The first outer sealant 24 may be disposed so as to face the first outer space OS based on the first packing member 23. As the cartridge 22 is inserted into the first through-hole 231, the first outer sealant 24 may be applied to the gap defined between the first potting layer 223 and the first packing member 23 and may then be hardened. Consequently, the first outer sealant 24 may hermetically seal the gap defined between the first packing member 23 and the first potting layer 223 in the first outer space OS, whereby it is possible to prevent direct mixing of dry gas and wet gas between the first packing member 23 and the first potting layer 223. The first outer sealant 24, which is made of a liquid resin selected from the group consisting of liquid polyurethane resin, liquid silicone resin, liquid epoxy resin, liquid elastomer resin, and a combination thereof, may be applied to the first packing member 23 and may be hardened after the first packing member 23 is disposed between the cartridge 22 and the mid-case 21 in order to form the hermetic seal between the first potting layer 223 and the first packing member 23 in the first outer space OS. After the first packing member 23 is disposed between the cartridge 22 and the mid-case 21, the first outer sealant 24 may also be applied and hardened so as to fill the gap between the first potting layer 223 and the first packing member 23 in order to form the hermetic seal between the cartridge 22 and the mid-case 21.

Referring to FIGs. 6 and 7, when the first sealing portion 240 is implemented so as to be disposed in the inner space IS, the first sealing portion 240 may include a first inner sealant 25.

The first inner sealant 25 forms the hermetic seal between the first potting layer 223 and the first packing member 23 in the inner space IS. The first inner sealant 25 forms the hermetic seal between the first packing member 23 and the first potting layer 223 in the inner space IS disposed on the side opposite the first outer space OS based on the first packing member 23. The first inner sealant 25 may be disposed so as to face the interior of the mid-case 21 based on the first packing member 23. As the cartridge 22 is inserted into the first through-hole 231, the first inner sealant 25 may be applied to the gap defined between the first potting layer 223 and the first packing member 23 and may then be hardened. Consequently, the first inner sealant 25 may hermetically seal the gap defined between the first packing member 23 and the first potting layer 223 in the inner space IS, whereby it is possible to prevent direct mixing of dry gas and wet gas between the first packing member 23 and the first potting layer 223. The first inner sealant 25, which is made of a liquid resin selected from the group consisting of liquid polyurethane resin, liquid silicone resin, liquid epoxy resin, liquid elastomer resin, and a combination thereof, may be applied to the first packing member 23 and may be hardened after the first packing member 23 is disposed between the cartridge 22 and the mid-case 21 in order to form a hermetic seal between the cartridge 22 and the first packing member 23 in the inner space IS. After the first packing member 23 is disposed between the cartridge 22 and the mid-case 21, the first inner sealant 25 may also be applied and hardened so as to fill a gap between the cartridge 22 and the mid-case 21 in order to form the hermetic seal between the cartridge 22 and the mid-case 21.

Referring to FIGs. 5 to 7, when the first sealing portion 240 is implemented so as to be disposed in both the first outer space OS and the inner space IS, the first sealing portion 240 may include both the first outer sealant 24 and the first inner sealant 25. In the humidifier 1 for fuel cells according to the first embodiment, therefore, it is possible to achieve the following effects.

First, in the humidifier 1 for fuel cells according to the first embodiment, a hermetic seal may be formed between the cartridge 22 and the mid-case 21 using the first packing member 23, and additionally a hermetic seal may be formed between the first packing member 23 and the first potting layer 223 using the sealant, whereby it is possible to increase the force of hermetic sealing between the first packing member 23 and the cartridge 22.

Second, the first outer sealant 24 may form the hermetic seal between the first packing member 23 and the first potting layer 223 in the first outer space OS, and additionally the first inner sealant 25 may form the hermetic seal between the first packing member 23 and the first potting layer 223 in the inner space IS, whereby it is possible to implement a dual hermetic sealing structure by the sealants. In the humidifier 1 for fuel cells according to the first embodiment, therefore, the area of hermetic sealing between the first packing member 23 and the first potting layer 223 may be increased by the sealants, whereby it is possible to further increase the force of hermetic sealing between the first packing member 23 and the cartridge 22.

Third, it is possible to prevent introduction of gas into the space defined between the first packing member 23 and the first potting layer 223 from the first outer space OS by the first outer sealant 24, and additionally it is possible to prevent introduction of gas into the space defined between the first packing member 23 and the first potting layer 223 from the inner space IS by the first inner sealant 25. Consequently, it is possible to prevent force from being applied to the first packing member 23 in a direction in which the first packing member is separated from the first potting layer 223 by gas permeating into a space between the first packing member 23 and the first potting layer 223. In the humidifier 1 for fuel cells according to the first embodiment, therefore, it is possible to prevent reduction in force of tight contact between the first packing member 23 and the cartridge 22.

Fourth, as each of the first outer sealant 24 and the first inner sealant 25 is applied in a liquid state, it is possible to form the hermetic seal between the first packing member 23 and the first potting layer 223 irrespective of the shape or size of the gap between the first packing member 23 and the first potting layer 223. Consequently, it is possible to improve responsiveness to the shape of the first packing member 23 and the cartridge 22 in hermetically sealing the first packing member 23 and the cartridge 22.

Referring to FIGs. 2 to 6, the humidifying module 2 may include a first blocking portion 260.

The first blocking portion 260 is coupled to the first packing member 23 so as to limit the flowable distance of the first sealing portion 240. The first blocking portion 260 may be coupled to the first packing member 23 so as to be located on the side opposite the first potting layer 223 based on the first sealing portion 240. Consequently, the first blocking portion 260 may prevent the first sealing portion 240 from being pressed by the first potting layer 223 during a process in which the first sealing portion is applied in a liquid state and hardened or may prevent the first sealing portion from moving in a direction in which the first sealing portion becomes distant from the first potting layer 223 due to the weight of the first sealing portion 240, whereby it is possible to prevent reduction of hermetic sealing force through the first sealing portion 240.

Referring to FIG. 7, the first blocking portion 260 may include a first outer blocking portion 26 and a first inner blocking portion 27.

The first outer blocking portion 26 limits the flowable distance of the first outer sealant 24. The first outer blocking portion 26 may be coupled to the first packing member 23. The first inner blocking portion 27 limits the flowable distance of the first inner sealant 25. The first inner blocking portion 27 may be coupled to the first packing member 23. The first inner blocking portion 27 may be coupled to the first packing member 23 at a position spaced apart from the first outer blocking portion 26. For example, the first outer blocking portion 26 may be coupled to the surface of the first packing member 23 disposed on the side facing the first cap 3, and the first inner blocking portion 27 may be coupled to the surface of the first packing member 23 disposed on the side facing the inner space IS. A plurality of first inner blocking portions 27 may be provided. In this case, the first inner blocking portions 27 may be disposed spaced apart from each other in a first axis direction (X-axis direction).

The first packing member 23 may include a first outer recess 232 configured to receive the first outer sealant 24 and a first inner recess 233 configured to receive the first inner sealant 25.

The first outer recess 232 may be disposed between the first outer blocking portion 26 and the first potting layer 223. The first outer sealant 24 may be applied to the first outer recess 232 so as to be received therein and may then be hardened. As the result of being received in the first outer recess 232, the first outer sealant 24 may be located between the first outer blocking portion 26 and the first potting layer 223. Since the first outer sealant 24 is applied along the first outer recess 232 and is then hardened, as described above, the first outer sealant may form the hermetic seal between the first packing member 23 and the first potting layer 223. The first outer blocking portion 26 may limit the flowable distance of the first outer sealant 24 received in the first outer recess 232. The first outer blocking portion 26 may be coupled to the first packing member 23 so as to project from the first packing member 23. As a result, the flow of the first outer sealant 24 received in the first outer recess 232 may be limited by the first outer blocking portion 26.

The first inner recess 233 may be disposed between the first inner blocking portion 27 and the first potting layer 223. The first inner sealant 25 may be applied to the first inner recess 233 so as to be received therein and may then be hardened. As the result of being received in the first inner recess 233, the first inner sealant 25 may be located between the first inner blocking portion 27 and the first potting layer 223. As a result, the first inner sealant 25 may be received in the first inner recess 233 and hardened, whereby the first inner sealant may form the hermetic seal between the first packing member 23 and the first potting layer 223. The first inner blocking portion 27 may limit the flowable distance of the first inner sealant 25 received in the first inner recess 233. The first inner blocking portion 27 may be coupled to the first packing member 23 so as to project from the first packing member 23. As a result, the flow of the first inner sealant 25 received in the first inner recess 233 may be limited by the first inner blocking portion 27.

In the humidifier 1 for fuel cells according to the first embodiment, therefore, it is possible to achieve the following effects.

First, the first outer recess 232 may guide a path along which the first outer sealant 24 is applied and the first inner recess 233 may guide a path along which the first inner sealant 25 is applied, whereby it is possible to improve ease and accuracy in application of the first outer sealant 24 and the first inner sealant 25.

Second, the first outer recess 232 and the first inner recess 233 may receive the first outer sealant 24 and the first inner sealant 25, respectively, whereby it is possible to limit the flow of the first outer sealant 24 and the first inner sealant 25 while deviating from application positions thereof until the first outer sealant and the first inner sealant are hardened. As a result, it is possible to reduce the degree of lowering in percentage of the sealants that form the hermetic seal between the first packing member 23 and the first potting layer 223 due to deviation of the first outer sealant 24 and the first inner sealant 25 from the application positions thereof. In the humidifier 1 for fuel cells according to the first embodiment, therefore, it is possible to further improve accuracy in hermetic sealing using the sealants and to increase hermetic sealing efficiency by the sealants, whereby it is possible to reduce cost necessary for hermetic sealing using the sealants.

Each of the first outer recess 232 and the first inner recess 233 may be formed in a hemispherical shape; however, the present disclosure is not limited thereto, and each of the first outer recess and the first inner recess may be formed in any of other shapes as long as it is possible to receive the first outer sealant 24 and the first inner sealant 25. Each of the first outer recess 232 and the first inner recess 233 may be formed along the interface between the first packing member 23 and the first potting layer 223 in the shape of a closed curve.

Referring to FIGs. 2 to 4 and 7, the first outer blocking portion 26 limits the flowable distance of the first outer sealant 24 received in the first outer recess 232. The first outer blocking portion 26 may be coupled to the first packing member 23 so as to project from the first packing member 23. As a result, the flow of the first outer sealant 24 received in the first outer recess 232 may be limited by the first outer blocking portion 26. In the humidifier 1 for fuel cells according to the first embodiment, therefore, it is possible to limit the flow of the first outer sealant 24 using the first outer blocking portion 26, in addition to the first outer recess 232, whereby it is possible to further improve accuracy in application of the sealant and to further improve stability in hermetic sealing through the first outer sealant 24.

The first outer blocking portion 26 may include a first outer blocking member 261 and a first outer partition member 262.

The first outer blocking member 261 limits the flow of the first outer sealant 24 received in the first outer recess 232. The first outer blocking member may be formed so as to project from the first packing member 23 toward the first outer space OS. The first outer blocking member 261 may be disposed so as to surround the first outer recess 232. In this case, the first outer sealant 24 may be disposed between the first outer blocking member 261 and the first potting layer 223. As a result, it is possible to limit the flow of the first outer sealant 24 received in the first outer recess 232 in a direction opposite a direction toward the first potting layer 223.

The first outer partition member 262 reduces the amount of loss of the first outer sealant 24 present in the first outer space OS. The first outer partition member 262 may be formed so as to project from the first packing member 23 toward the first potting layer 223. The flow of the first outer sealant 24 disposed in the first outer space OS to the inner space IS may be limited by the first outer partition member 262. As a result, it is possible to reduce the amount of loss of the first outer sealant 24 in the first outer space OS. In the humidifier 1 for fuel cells according to the first embodiment, therefore, it is possible to increase the amount of the first outer sealant 24 that forms the hermetic seal between the first packing member 23 and the first potting layer 223 in the first outer space OS, whereby it is possible to further increase hermetic sealing force by the first outer sealant 24 in the first outer space OS.

In addition, when the first packing member 23 is brought into tight contact with the first potting layer 223, the first outer partition member 262 may elastically press the first potting layer 223. As a result, it is possible to further increase the force of hermetic sealing between the first packing member 23 and the first potting layer 223.

The first inner blocking portion 27 limits the flowable distance of the first inner sealant 25 received in the first inner recess 233. The first inner blocking portion 27 may be coupled to the first packing member 23 so as to project from the first packing member 23. As a result, the flow of the first inner sealant 25 received in the first inner recess 233 may be limited by the first inner blocking portion 27.

In the humidifier 1 for fuel cells according to the first embodiment, therefore, it is possible to limit the flow of the first inner sealant 25 using the first inner blocking portion 27, in addition to the first inner recess 233, whereby it is possible to further improve accuracy in application of the sealant and to further improve stability in hermetic sealing through the first inner sealant 25.

Referring to FIGs. 2 to 4 and 7, the first inner blocking portion 27 may include an inner blocking member 271 and an inner partition member 272.

The inner blocking member 271 limits the flowable distance of the first inner sealant 25 received in the first inner recess 233. The inner blocking member 271 may be formed so as to project from the first packing member 23. The inner blocking member 271 may be disposed so as to surround the first inner recess 233. In this case, the first inner sealant 25 may be disposed between the inner blocking member 271 and the first potting layer 223. As a result, it is possible to limit the flow of the first inner sealant 25 received in the first inner recess 233 in the direction opposite the direction toward the first potting layer 223.

The inner partition member 272 reduces the amount of loss of the first inner sealant 25 present in the inner space IS. The inner partition member 272 may be formed so as to project from the first packing member 23 toward the first potting layer 223. The flow of the first inner sealant 25 disposed in the inner space IS to the first outer space OS may be limited by the inner partition member 272. As a result, it is possible to reduce the amount of loss of the first inner sealant 25 in the inner space IS. In the humidifier 1 for fuel cells according to the first embodiment, therefore, it is possible to increase the amount of the first inner sealant 25 that forms the hermetic seal between the first packing member 23 and the first potting layer 223 in the inner space IS, whereby it is possible to further increase hermetic sealing force by the first inner sealant 25 in the inner space IS.

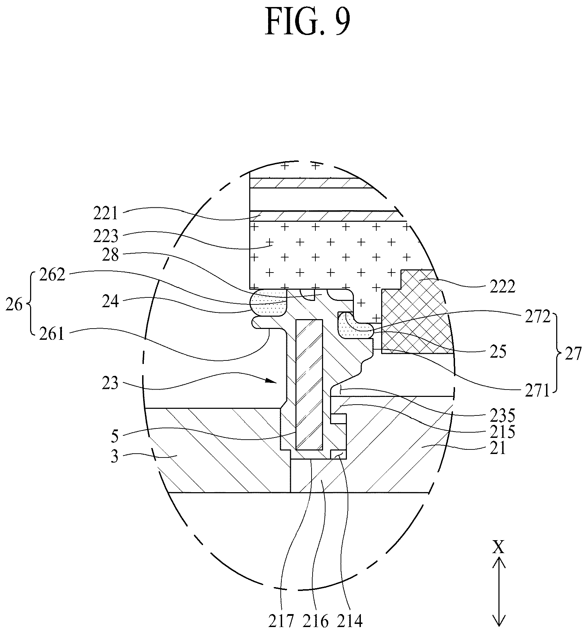

Referring to FIGs. 7 and 9, the humidifying module 2 may include a first pressed wing 28 coupled to the first packing member 23. The first pressed wing 28 may be formed so as to project from the first packing member 23 toward the first potting layer 223. The first pressed wing 28 may be pressed by the first potting layer 223, whereby the first pressed wing may be elastically compressed. As the first pressed wing 28 is disposed between the first packing member 23 and the first potting layer 223, the flow of gas or liquid to the gap defined between the first packing member 23 and the first potting layer 223 may be limited. In the humidifier 1 for fuel cells according to the first embodiment, therefore, the first pressed wing 28 forms the hermetic seal between the first packing member 23 and the first potting layer 223, in addition to the first outer sealant 24 and the first inner sealant 25, whereby it is possible to further increase the force of hermetic sealing between the first packing member 23 and the first potting layer 223.

The first pressed wing 28 may be made of an elastically deformable material. For example, the first pressed wing 28 may be made of rubber.

Referring to FIGs. 7 to 9, the mid-case 21 may include a support recess 214 configured to allow at least a part of one end of the first packing member 23 to be inserted thereinto and to support the first packing member. The first packing member 23 may include a first catching recess 235 configured to allow at least a part of one end of the mid-case 21 to be inserted thereinto in the state in which the first packing member is inserted into the support recess 214. The at least a part of the mid-case 21 is inserted into the first catching recess 235, whereby a catching structure may be implemented between the mid-case 21 and the first packing member 23. For example, as shown in FIG. 7, one of an inner projection 215 and an outer projection 216 of the mid-case 21, e.g. the inner projection 215, which is disposed closer to the inner space IS of the mid-case 21, is inserted into the first catching recess 235, whereby the catching structure may be implemented between the mid-case 21 and the first packing member 23. Specifically, a projection disposed at the edge of the first packing member 23 may be inserted into the support recess 214, and one of the inner projection 215 and the outer projection 216, e.g. the inner projection 215, may be inserted into the support recess 214. As a result, movement of the first packing member 23 and the mid-case 21 in the first axis direction (X-axis direction) may be limited. In the humidifier 1 for fuel cells according to the first embodiment, therefore, it is possible to increase the force of coupling between the first packing member 23 and the mid-case 21, whereby it is possible to further increase the force of hermetic sealing between the mid-case 21 and the cartridge 22 using the first packing member 23.

The mid-case 21 may include a support member 217 configured to support an outer surface of the first packing member 23. The support member 217 may be disposed at the part of the outer projection 216 that contacts the outer surface of the first packing member 23. When pressure is applied to the first packing member 23 and the outer surface of the first packing member 23 is supported by the support member 217, the first packing member 23 may be compressed toward the mid-case 21 and may be brought into tight contact with the mid-case 21. In the humidifier 1 for fuel cells according to the first embodiment, therefore, it is possible to further increase the force of coupling between the first packing member 23 and the mid-case 21, whereby it is possible to further increase the force of hermetic sealing between the mid-case 21 and the cartridge 22 using the first packing member 23.

Referring to FIG. 9, the humidifying module 2 may further include a reinforcement member 5 inserted into at least a part of the first packing member 23, the reinforcement member having hardness higher than the hardness of the first packing member 23.

For example, the first packing member 23 may have a first Shore A hardness of 10 to 100, and the reinforcement member may have a second hardness higher than the first hardness.

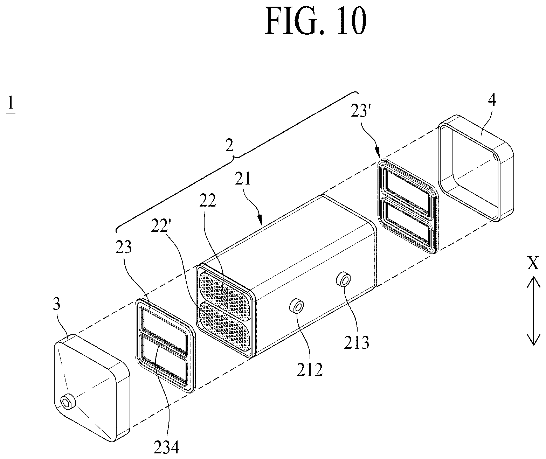

Referring to FIG. 10, the humidifier 1 for fuel cells according to the first embodiment may be implemented such that a plurality of cartridges 22 is coupled to the mid-case 21. In this case, the mid-case 21 may include a partition wall member (not shown) disposed between the cartridges 22 and 22'. The cartridges 22 and 22' may be individually detachably coupled to the mid-case 21 in the state in which the partition wall member is disposed between the cartridges.

When the plurality of cartridges 22 is coupled to the mid-case 21, the first packing member 23 may include a first sub-packing member 234.

The first sub-packing member 234 is disposed between the cartridges 22 and 22' to form a hermetic seal between the cartridges 22 and 22'. The first sub-packing member 234 may prevent direct mixing of dry gas and wet gas between the cartridges 22 and 22'.

The first sub-packing member 234 may be brought into tight contact with the cartridges 22 and 22' by pressure of at least one of dry gas or wet gas. In the humidifier 1 for fuel cells according to the first embodiment, therefore, it is possible to implement hermetic sealing force necessary to prevent direct mixing of dry gas and wet gas between the cartridges 22 and 22' without additional construction, whereby it is possible to reduce cost necessary to increase the force of hermetic sealing between the cartridges 22 and 22'. The first sub-packing member 234 may be made of an elastically deformable material. For example, the first sub-packing member 234 may be made of rubber.

Referring to FIGs. 2 to 10, the second cap 4 is coupled to the other end of the humidifying module 2. The humidifying module 2 may include a second packing member 23' airtightly coupled to one end of the humidifying module through mechanical assembly such that the second cap 4 can fluidly communicate with only the hollow fiber membranes. A space between the second cap 4 and the cartridge 22 may be hermetically sealed by the second packing member 23'. The second packing member 23' is implemented so as to be approximately identical to the first packing member 23, and therefore a detailed description thereof will be omitted.

The humidifying module 2 may include a second sealing portion configured to form a hermetic seal between the second packing member 23' and the second potting layer 224, a second blocking portion coupled to the second packing member 23', and a second pressed wing coupled to the second packing member 23'. The second sealing portion, the second blocking portion, and the second pressed wing are implemented so as to be approximately identical to the first sealing portion 240, the first blocking portion 260, and the first pressed wing 28, and therefore a detailed description thereof will be omitted. When the plurality of cartridges 22 is coupled to the mid-case 21, the second packing member 23' may include a second sub-packing member (not shown). The second sub-packing member is also implemented so as to be approximately identical to the first sub-packing member 234, and therefore a detailed description thereof will be omitted.

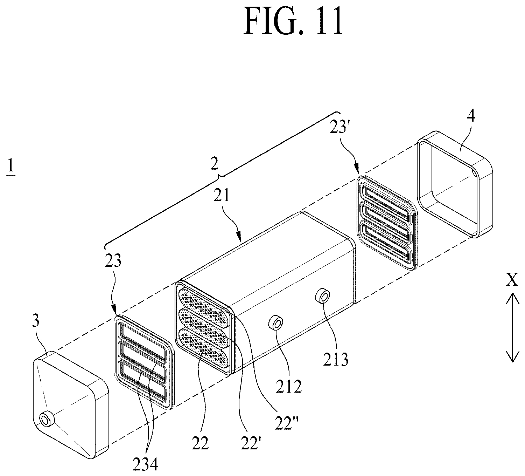

Meanwhile, FIG. 10 shows that two cartridges 22 are coupled to the mid-case 21; however, the present disclosure is not limited thereto, and the humidifier 1 for fuel cells according to the first embodiment may be implemented such that three cartridges 21, 21', and 21" are coupled to the mid-case 21, as shown in FIG. 11. To this end, the first packing member 23 may include two first sub-packing members 234, and the second packing member 23' may include two second sub-packing members. Although not shown, the humidifier 1 for fuel cells according to the first embodiment may be implemented such that four or more cartridges 22 are coupled to the mid-case 21. In this case, the number of the first sub-packing members 234 and the number of the second sub-packing members may be increased so as to correspond to the number of the cartridges 22 coupled to the mid-case 21. For example, when the number of the cartridges 22 is N, the number of the first sub-packing members 234 and the number of the second sub-packing members may be N-1.

### <Humidifier for fuel cells according to second embodiment>

Referring to FIGs. 2 and 12 to 18, a humidifier 1 for fuel cells according to a second embodiment may be implemented such that the humidifying module 2 includes a first sealant 6.

The first sealant 6 forms a hermetic seal between the first packing member 23 and the cartridge 22 in an inner space IS disposed on the mid-case 21 side based on the first packing member 23. The receiving hole 211 may be located in the inner space IS. The first sealant 6 may form the hermetic seal between the first packing member 23 and the first potting layer 223, thereby forming the hermetic seal between the first packing member 23 and the cartridge 22. This will be described in detail as follows.

First, the first sealant 6 is applied to the first packing member 23. The first sealant 6 may be applied to the first packing member 23 so as to surround the first through-hole 231.

Subsequently, the cartridge 22 is inserted into the first through-hole 231 of the first packing member 23 having the first sealant 6 applied thereto. As a result, the first sealant 6 may be located in the gap defined between the first potting layer 223 and the first packing member 23. Consequently, the first sealant 6 may hermetically seal the gap defined between the first packing member 23 and the first potting layer 223, whereby it is possible to prevent direct mixing of dry gas and wet gas between the first packing member 23 and the first potting layer 223.

The first sealant 6, which is made of a liquid resin selected from the group consisting of liquid polyurethane resin, liquid silicone resin, liquid epoxy resin, liquid elastomer resin, and a combination thereof, may fill the gap defined between the first potting layer 223 and the first packing member 23 and may then be hardened, whereby it is possible to form the hermetic seal between the cartridge 22 and the first packing member 23.

In the humidifier 1 for fuel cells according to the second embodiment, therefore, it is possible to achieve the following effects.

First, it is possible to hermetically seal the gap between the first packing member 23 and the first potting layer 223 through the first sealant 6, whereby it is possible to increase the force of hermetic sealing between the first packing member 23 and the cartridge 22.

Second, as first sealant 6 is applied in a liquid state, it is possible to form the hermetic seal between the first packing member 23 and the first potting layer 223 irrespective of the shape or size of the gap between the first packing member 23 and the first potting layer 223. Consequently, it is possible to improve responsiveness to the shape of the first packing member 23 and the cartridge 22 in hermetically sealing the first packing member 23 and the cartridge 22.

Referring to FIGs. 2 and 12 to 18, the first packing member 23 may include a first packing body 230 disposed between the first potting layer 223 and the mid-case 21, a first inner recess 233 configured to receive the first sealant 6, a first blocking member 236 disposed at one side of the first inner recess 233, and a first partition member 237 disposed at the other side of the first inner recess 233.

The first packing body 230 defines the outer shape of the first packing member 23. The first through-hole 231 may be formed through the first packing body 230 in a direction perpendicular to the X-axis direction. The cartridge 22 may be received in the first through-hole 231, whereby the first packing body 230 may be disposed between the mid-case 21 and the first potting layer 223. As the first packing body 230 is brought into tight contact with each of the mid-case 21 and the first potting layer 223 between the mid-case 21 and the first potting layer 223, a space between the first packing body 230 and the first cap 3 may be isolated from a space between the first packing body 230 and the mid-case 21.

The first inner recess 233 may be disposed in the surface of the first packing body 230 that faces the mid-case 21 side. The first inner recess 233 may be formed so as to surround the first through-hole 231. The first sealant 6 may be applied to the first packing member 23 so as to be received in the first inner recess 233. As a result, the first inner recess 233 may serve to guide an application path of the first sealant 6, whereby it is possible to improve convenience in application of the first sealant 6, and may limit the flow of the first sealant 6 until the first sealant is hardened, whereby it is possible to improve accuracy in application of the first sealant 6.

The first blocking member 236 limits the flowable distance of the first sealant 6 received in the first inner recess 233. The first blocking member 236 may be disposed at one side of the first inner recess 233. The first blocking member 236 may be disposed at one side of the first inner recess 233 so as to surround the first inner recess 233. The first inner recess 233 may be disposed between the first blocking member 236 and the first potting layer 223. The first blocking member 236 may be formed so as to project from the first packing body 230 toward the inner space IS. The first blocking member 236 may project toward the inner space IS so as to have a larger length than the first inner recess 233. The first sealant may be located in the first inner recess 233 to form a hermetic seal between the first blocking member 236 and the first potting layer 223. As a result, the flow of the first sealant 6 received in the first inner recess 233 toward the first blocking member 236 may be limited. In the humidifier 1 for fuel cells according to the second embodiment, therefore, it is possible to limit the flow of the first sealant 6 through the first blocking member 236, in addition to the first inner recess 233, whereby it is possible to further improve accuracy in application of the first sealant 6.

The first partition member 237 may be disposed at the other side of the first inner recess 233. The other side of the first inner recess 233 may be the side opposite one side of the first inner recess 233 based on the first inner recess 233. The first partition member 237 may be disposed at the other side of the first inner recess 233 so as to surround the first through-hole 231. As a result, the first inner recess 233 may be located between the first blocking member 236 and the first partition member 237. The first partition member 237 may be formed so as to project from the first packing member 230 toward the mid-case 21. As a result, the flow of the first sealant 6 received in the first inner recess 233 toward the first partition member 237 may be limited.

The first sealant 6 may include a first sealant body 61 located in the first inner recess 233 and a first projection sealant 62 projecting from the first sealant body 61 to form the hermetic seal between the first blocking member 236 and the first potting layer 223.

The first sealant body 61 forms the hermetic seal between the first packing member 23 and the first potting layer 223 in the first inner recess 233. The first sealant body 61 may be formed as the result of the first sealant 6 being applied to and received in the first inner recess 233. The first sealant body 61 may be brought into tight contact with each of the first packing member 23 and the first potting layer 223 in the first inner recess 233 to form the hermetic seal between the first packing member 23 and the first potting layer 223.

The first projection sealant 62 may project from the first sealant body 61 toward the inner space IS, whereby the first projection sealant may be disposed between the first blocking member 236 and the first potting layer 223. In this case, the first blocking member 236 may project toward the inner space IS so as to have a larger length than the first inner recess 233. As a result, the first blocking member 236 may be disposed at one side of the first projection sealant 62 and the first potting layer 223 may be disposed at the other side of the first projection sealant 62, whereby it is possible to form the hermetic seal between the first potting layer 223 and the first blocking member 236. The other side of the first projection sealant 62 means the side opposite one side of the first projection sealant 62 based on the first projection sealant 62. As a result, it is possible to form the hermetic seal between the first packing member 23 and the first potting layer 223 through the first sealant body 61, and additionally it is possible to form the hermetic seal between the first blocking member 236 and the first potting layer 223 through the first projection sealant 62. In the humidifier 1 for fuel cells according to the second embodiment, therefore, the area of hermetic sealing between the first packing member 23 and the first potting layer 223 may be increased by the first sealant 6, whereby it is possible to increase the force of hermetic sealing between the first packing member 23 and the first potting layer 223.

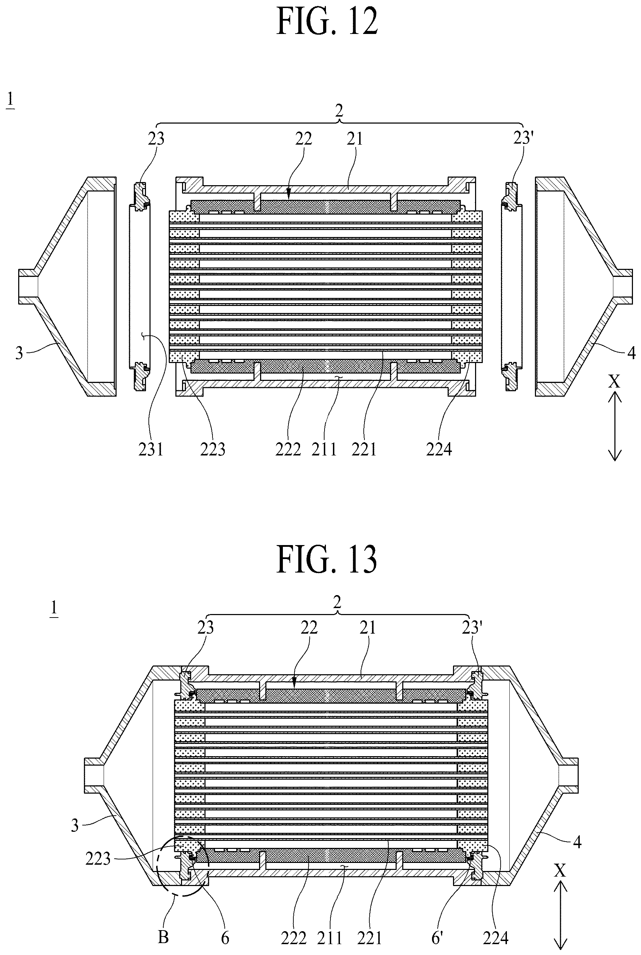

Referring to FIGs. 13 to 18, the first projection sealant 62 may be formed as the result of the first sealant 6 being applied so as to have a larger volume than the first inner recess 233 and being pressed by the first potting layer 223. This will be described in detail as follows.

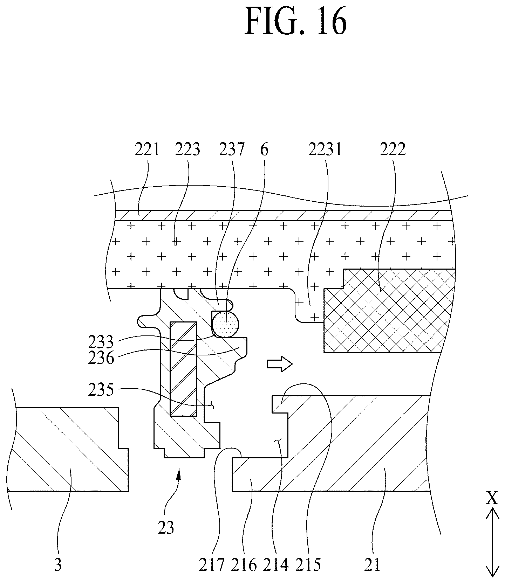

First, as shown in FIG. 16, when the first sealant 6 is applied so as to have a larger volume than the first inner recess 233, the part of the first sealant 6 that exceeds the volume of the first inner recess 233 projects from the first inner recess 233.

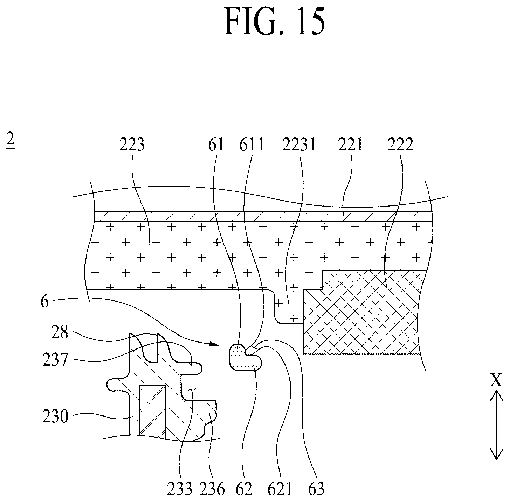

Subsequently, in FIG. 16, when the first packing member 23 is moved in a direction indicated by an arrow, the first sealant 6 is pressed by the first potting layer 223, whereby the first projection sealant 62 may be formed from the first sealant body 61, as shown in FIG. 15.

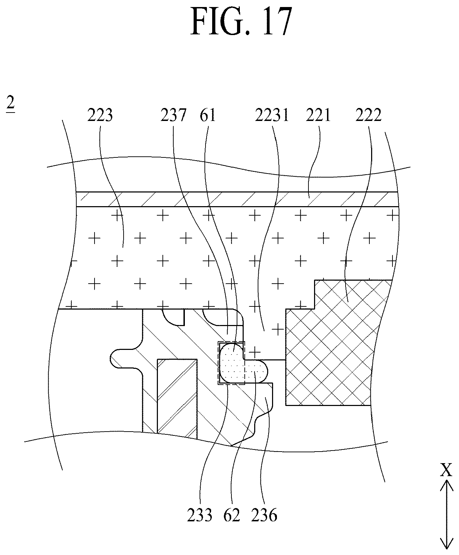

Referring to FIGs. 12 to 18, the first potting layer 223 may include a first pressing member 2231 projecting toward the first packing member 23. The first pressing member 2231 presses the first sealant 6. As shown in FIG. 16, when the first packing member 23 is moved in the direction indicated by the arrow, the first sealant 6 may be pressed by the first pressing member 2231, whereby the first sealant may be deformed, as shown in FIG. 17. In this case, the first sealant 6 may include a first receiving recess 63 (shown in FIG. 15) configured to receive the first pressing member 2231. The first receiving recess 63 may be formed as the result of the first sealant 6 being pressed by the first pressing member 2231. The first sealant body 61 may include a first body contact member 611 configured to contact one side of the first pressing member 2231 received in the first receiving recess 63. The first sealant body 61 may form a hermetic seal between one side of the first pressing member 2231 and the first packing member 23 through the first body contact member 611 in a state of being received in the first inner recess 233. One side of the first pressing member 2231 means the side of the first pressing member 2231 that faces the first inner recess 233. The first projection sealant 62 may include a first projection contact member 621 configured to contact the other side of the first pressing member 2231 received in the first inner recess 233. The first projection sealant 62 may form a hermetic seal between the other side of the first pressing member 2231 and the first blocking member 236 through the first projection contact member 621, whereby it is possible to form a hermetic seal between the first pressing member 2231 and the first packing member 23, in addition to the first sealant body 61. The other side of the first pressing member 2231 means the side of the first pressing member 2231 that faces the first blocking member 236. The angle between one side of the first pressing member 2231 and the other side of the first pressing member 2231 may be a right angle; however, the present disclosure is not limited thereto, and the angle may be changed as long as one side of the first pressing member 2231 can contact the first sealant body 61 and the other side of the first pressing member 2231 can contact the first projection sealant 62.

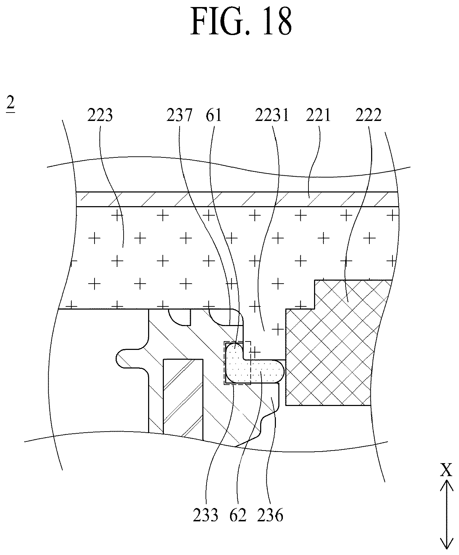

Referring to FIGs. 17 and 18, the first pressing member 2231 may be inserted into the first inner recess 233 as the result of the first partition member 237 being elastically compressed. For example, when additional pressure is applied to the first packing member 23 in a direction toward the first pressing member 2231 in FIG. 17, whereby the first partition member 237 is elastically compressed, as shown in FIG. 18, the first pressing member 2231 may be inserted into the first inner recess 233 (a dotted part of FIGs. 17 and 18). As a result, the first sealant body 61 received in the first inner recess 233 may be pushed out of the first inner recess 233 by the volume of the first pressing member 2231 inserted into the first inner recess 233, whereby the volume of the first projection sealant 62 may be increased. Consequently, the area of the first projection contact member 621 of the first projection sealant 62 abutting the other side of the first pressing member 2231 may be increased. In the humidifier 1 for fuel cells according to the second embodiment, therefore, the area of hermetic sealing between the first packing member 23 and the first potting layer 223 may be increased by the first sealant 6, whereby it is possible to further increase the force of hermetic sealing between the first packing member 23 and the cartridge 22.

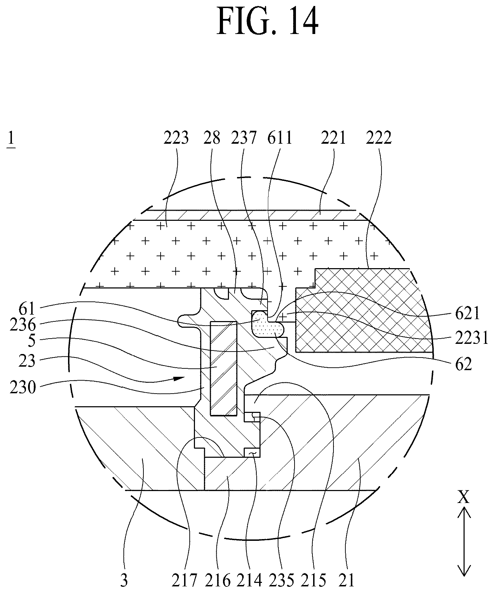

Referring to FIGs. 14 and 15, the humidifying module 2 may include a first pressed wing 28 coupled to the first packing member 23. The first pressed wing 28 may be formed so as to project from the first packing member 23 toward the first potting layer 223. The first pressed wing 28 may be pressed by the first potting layer 223, whereby the first pressed wing may be elastically compressed. As the first pressed wing 28 is brought into tight contact with the first potting layer 223, the flow of gas or liquid to the gap defined between the first packing member 23 and the first potting layer 223 may be limited. In the humidifier 1 for fuel cells according to the second embodiment, therefore, the hermetic seal may be formed between the first packing member 23 and the first potting layer 223 through the first pressed wing 28, in addition to the first sealant 6, whereby it is possible to further increase the force of hermetic sealing between the first packing member 23 and the first potting layer 223.

The first pressed wing 28 may be made of an elastically deformable material. For example, the first pressed wing 28 may be made of rubber.

Referring to FIGs. 14 and 16, the mid-case 21 may include a support recess 214 configured to allow at least a part of one end of the first packing member 23 to be inserted thereinto and to support the first packing member. The first packing member 23 may include a first catching recess 235 configured to allow at least a part of one end of the mid-case 21 to be inserted thereinto in the state in which the first packing member is inserted into the support recess 214. The at least a part of the mid-case 21 is inserted into the first catching recess 235, whereby a catching structure may be implemented between the mid-case 21 and the first packing member 23.

For example, as shown in FIG. 14, one of an inner projection 215 and an outer projection 216 of the mid-case 21, e.g. the inner projection 215, which is disposed closer to the inner space IS of the mid-case 21, is inserted into the first catching recess 235, whereby the catching structure may be implemented between the mid-case 21 and the first packing member 23. Specifically, a projection disposed at the edge of the first packing member 23 may be inserted into the support recess 214, and one of the inner projection 215 and the outer projection 216, e.g. the inner projection 215, may be inserted into the support recess 214. As a result, movement of the first packing member 23 and the mid-case 21 in the first axis direction (X-axis direction) may be limited. In the humidifier 1 for fuel cells according to the second embodiment, therefore, it is possible to increase the force of coupling between the first packing member 23 and the mid-case 21, whereby it is possible to further increase the force of hermetic sealing between the mid-case 21 and the cartridge 22 using the first packing member 23.

The mid-case 21 may include a support member 217 configured to support the outer surface of the first packing member 23. The support member 217 may be disposed at the part of the outer projection 216 that contacts the outer surface of the first packing member 23. When pressure is applied to the first packing member 23 and the outer surface of the first packing member 23 is supported by the support member 217, the first packing member 23 may be compressed toward the mid-case 21 and may be brought into tight contact with the mid-case 21. In the humidifier 1 for fuel cells according to the second embodiment, therefore, it is possible to further increase the force of coupling between the first packing member 23 and the mid-case 21, whereby it is possible to further increase the force of hermetic sealing between the mid-case 21 and the cartridge 22 using the first packing member 23.

Referring to FIG. 14, the humidifying module 2 may further include a reinforcement member 5 inserted into at least a part of the first packing member 23. The reinforcement member 5 may be disposed in the first packing body 230. The reinforcement member 5 has hardness higher than the hardness of the first packing member 23. For example, the first packing member 23 may have a first Shore A hardness of 10 to 100, and the reinforcement member may have a second hardness higher than the first hardness. As a result, the first packing member 23 may be implemented so as to have higher strength through the reinforcement member 5.

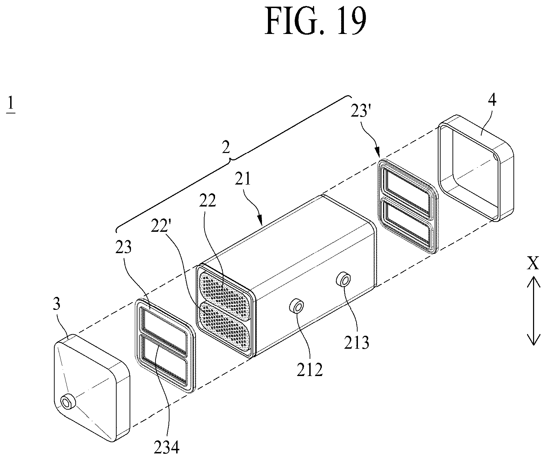

Referring to FIG. 19, the humidifier 1 for fuel cells according to the second embodiment may be implemented such that a plurality of cartridges 22 is coupled to the mid-case 21. In this case, the mid-case 21 may include a partition wall member (not shown) disposed between the cartridges 22 and 22'. The cartridges 22 and 22' may be individually detachably coupled to the mid-case 21 in the state in which the partition wall member is disposed between the cartridges.

When the plurality of cartridges 22 is coupled to the mid-case 21, the first packing member 23 may include a first sub-packing member 234.

The first sub-packing member 234 is disposed between the cartridges 22 and 22' to form a hermetic seal between the cartridges 22 and 22'. The first sub-packing member 234 may prevent direct mixing of dry gas and wet gas between the cartridges 22 and 22'.

The first sub-packing member 234 may be brought into tight contact with the cartridges 22 and 22' by pressure of at least one of dry gas or wet gas. In the humidifier 1 for fuel cells according to the second embodiment, therefore, it is possible to implement hermetic sealing force necessary to prevent direct mixing of dry gas and wet gas between the cartridges 22 and 22' without additional construction, whereby it is possible to reduce cost necessary to increase the force of hermetic sealing between the cartridges 22 and 22'. The first sub-packing member 234 may be made of an elastically deformable material. For example, the first sub-packing member 234 may be made of rubber.

Referring to FIGs. 2 and 12 to 20, the second cap 4 is coupled to the other end of the humidifying module 2. The space between the second cap 4 and the cartridge 22 may be hermetically isolated from the space between the cartridge 22 and the mid-case 21 by a second packing member 23'. The second packing member 23' is implemented so as to be approximately identical to the first packing member 23, and therefore a detailed description thereof will be omitted.

The humidifying module 2 may include a second sealant 6' (shown in FIG. 13) configured to form a hermetic seal between the second packing member 23' and the cartridge 22 and a second pressed wing (not shown) coupled to the second packing member 23'. The second sealant 6' and the second pressed wing are implemented so as to be approximately identical to the first sealant 6 and the first pressed wing 28, and therefore a detailed description thereof will be omitted.

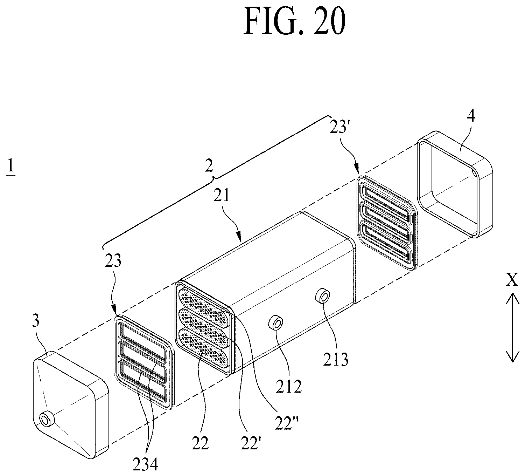

When the plurality of cartridges 22 is coupled to the mid-case 21, the second packing member 23' may include a second sub-packing member (not shown). The second sub-packing member is also implemented so as to be approximately identical to the first sub-packing member 234, and therefore a detailed description thereof will be omitted. Meanwhile, FIG. 19 shows that two cartridges 22 are coupled to the mid-case 21; however, the present disclosure is not limited thereto, and the humidifier 1 for fuel cells according to the second embodiment may be implemented such that three cartridges 21, 21', and 21" are coupled to the mid-case 21, as shown in FIG. 20. To this end, the first packing member 23 may include two first sub-packing members 234, and the second packing member 23' may include two second sub-packing members. Although not shown, the humidifier 1 for fuel cells according to the second embodiment may be implemented such that four or more cartridges 22 are coupled to the mid-case 21. In this case, the number of the first sub-packing members 234 and the number of the second sub-packing members may be increased so as to correspond to the number of the cartridges 22 coupled to the mid-case 21. For example, when the number of the cartridges 22 is N, the number of the first sub-packing members 234 and the number of the second sub-packing members may be N-1.

## Claims

1. A humidifier (1) for fuel cells, the humidifier (1) comprising:
a humidifying module (2) configured to humidify dry gas supplied from outside using wet gas discharged from a fuel cell stack; and
a first cap (3) coupled to one end of the humidifying module (2), wherein
the humidifying module (2) comprises:
a mid-case (21) open at opposite ends thereof; and
at least one cartridge (22) disposed in the mid-case (21), the cartridge (22) comprising a plurality of hollow fiber membranes (221),
the cartridge (22) comprises:
an inner case (222) open at opposite ends thereof, the inner case (222) being configured to receive the hollow fiber membranes (221);
a first potting layer (223) configured to pot one end of each of the hollow fiber membranes (221), and
a second potting layer (224) configured to pot the other end of the hollow fiber membranes (221),
whereby an inner space (IS) is formed between the mid-case (21) and the inner case (222),
the humidifying module (2) comprises:
a first packing member (23) airtightly coupled to one end of the humidifying module (2) through mechanical assembly and disposed between the cartridge (22) and the mid-case (21) to form a hermetic seal between the cartridge and the mid-case (21) such that the first cap (3) can fluidly communicate with only the hollows of the hollow fiber membranes (221);
whereby a first outer space (OS) is formed between the first packing member (23) and the first cap (3);
a first sealing portion/sealant configured to form a hermetic seal between the first packing member (23) and the first potting layer (223); and
a first blocking portion/member coupled to the first packing member (23) so as to limit a flowable distance of the first sealing portion/sealant,
the first sealing portion/sealant being made of a liquid resin selected from the group consisting of liquid polyurethane resin, liquid silicone resin, liquid epoxy resin, liquid elastomer resin and a combination thereof, applied to the first packing member and hardened after the first packing member is disposed between the cartridge and the mid-case in order to form the hermetic seal, and
the first sealing portion/sealant is disposed in at least one of a first outer space (OS) between the first packing member (23) and the first cap (3) based on the first packing member (23) and an inner space (IS) disposed on a side opposite the first outer space (OS) of the first packing member.

2. The humidifier (1) according to claim 1, wherein
the first sealing portion (240) comprises a first outer sealant (24) disposed in the first outer space (OS),
the first blocking portion (260) comprises a first outer blocking portion (26) coupled to the first packing member (23) so as to limit a flowable distance of the first outer sealant (24), and
the first outer sealant (24) is received in a first outer recess (232) disposed between the first outer blocking portion (26) and the first potting layer (223), the first outer sealant (24) being configured to form the hermetic seal between the first packing member (23) and the first potting layer (223).

3. The humidifier (1) according to claim 1, wherein
the first sealing portion (240) comprises a first inner sealant (25) disposed in the inner space (IS),
the first blocking portion (260) comprises a first inner blocking portion (27) coupled to the first packing member (23) so as to limit a flowable distance of the first inner sealant (25), and
the first inner sealant (25) is received in a first inner recess (233) disposed between the first inner blocking portion (27) and the first potting layer (223), the first inner sealant (25) being configured to form the hermetic seal between the first packing member (23) and the first potting layer (223).

4. The humidifier (1) according to claim 1, wherein
the first sealing portion (240) comprises a first outer sealant (24) disposed in the first outer space (OS) and a first inner sealant (25) disposed in the inner space (IS),
the first blocking portion (260) comprises a first outer blocking portion (26) coupled to the first packing member (23) so as to limit a flowable distance of the first outer sealant (24) and a first inner blocking portion (27) coupled to the first packing member (23) so as to limit a flowable distance of the first inner sealant (25), and
the first outer sealant (24) is received in a first outer recess (232) disposed between the first outer blocking portion (26) and the first potting layer (223), the first outer sealant (24) being configured to form the hermetic seal between the first packing member (23) and the first potting layer (223), and the first inner sealant is received in a first inner recess (233) disposed between the first inner blocking portion (27) and the first potting layer (223), the first inner sealant being configured to form the hermetic seal between the first packing member (23) and the first potting layer (223).

5. The humidifier (1) according to claim 2 or 4, wherein the first outer blocking portion (26) comprises a first outer blocking member (261) projecting from the first packing member (23) toward the first outer space (OS) and a first outer partition member (262) projecting from the first packing member (23) toward the first potting layer (223).

6. The humidifier for fuel cells according to claim 1,
wherein the first packing member (23) comprises a first inner recess (233) configured to receive the first sealing portion/sealant, a first blocking member (236) disposed at one side of the first inner recess (233), and a first partition member (237) disposed at the other side of the first inner recess (233),
wherein the first blocking member (236) projects toward the inner space (IS) so as to have a larger length than the first inner recess (233), and
wherein the first sealing portion/sealant is located in the first inner recess (233), the first sealing portion/sealant being configured to form a hermetic seal between the first blocking member (236) and the first potting layer (223).

7. The humidifier (1) according to claim 6, wherein
the first sealant (6) comprises a first sealant body (61) disposed in the first inner recess (233) and a first projection sealant (62) projecting from the first sealant body (61), the first projection sealant being configured to form the hermetic seal between the first blocking member (236) and the first potting layer (223).

8. The humidifier (1) according to claim 7, wherein the first projection sealant (62) is formed as a result of the first sealant (6) being applied so as to have a larger volume than the first inner recess (233) and being pressed by the first potting layer (223).

9. The humidifier (1) according to claim 7, wherein
the first potting layer (223) comprises a first pressing member (2231) projecting toward the first packing member (23),
the first sealant (6) comprises a first receiving recess (63) configured to receive the first pressing member (2231),
the first sealant body (61) comprises a first body contact member (611) configured to contact one side of the first pressing member (2231) received in the first receiving recess (63), and
the first projection sealant (62) comprises a first projection contact member (621) configured to contact the other side of the first pressing member (2231) received in the first receiving recess (63).

10. The humidifier (1) according to claim 9, wherein the first pressing member (2231) is inserted into the first inner recess (233) as a result of the first partition member (237) being elastically compressed.

11. The humidifier (1) according to claim 1 or 6, wherein
a first pressed wing (28) is coupled to the first packing member (23), and
the first pressed wing (28) projects from the first packing member (23) toward the first potting layer (223), the first pressed wing (28) being elastically compressed as a result of being pressed by the first potting layer (223).

12. The humidifier (1) according to claim 1 or 6, wherein
the mid-case (21) comprises a support recess (214) configured to allow at least a part of one end of the first packing member (23) to be inserted thereinto, and
the first packing member (23) comprises a first catching recess (235) configured to allow at least a part of one end of the mid-case (21) to be inserted thereinto.

13. The humidifier (1) according to claim 12, wherein the mid-case (21) comprises a support member (217) configured to support an outer surface of the first packing member (23).

14. The humidifier (1) according to claim 1 or 6, wherein the humidifying module (2) further comprises a first reinforcement member (5) inserted into at least a part of the first packing member (23), the reinforcement member (5) having hardness higher than hardness of the first packing member (23).

## Patentansprüche

1. Befeuchter (1) für Brennstoffzellen, wobei der Befeuchter (1) aufweist:
ein Befeuchtungsmodul (2), das dazu eingerichtet ist, Trockengas, das von außen zugeführt wird, unter Verwendung von Naßgas, das von einem Brennstoffzellenstapel abgegeben wird, zu befeuchten; und
eine erste Kappe (3), die mit einem Ende des Befeuchtungsmoduls (2) gekoppelt ist, wobei
das Befeuchtungsmodul (2) aufweist:
ein mittleres Gehäuse (21), das an seinen gegenüberliegenden Enden offen ist; und
mindestens eine Patrone (22), die in dem mittleren Gehäuse (21) angebracht ist, wobei die Patrone (22) eine Vielzahl von Hohlfasermembranen (221) umfasst,
wobei die Patrone (22) aufweist:
ein inneres Gehäuse (222), das an seinen gegenüberliegenden Enden offen ist, wobei das innere Gehäuse (222) dazu eingerichtet ist, die Hohlfasermembranen (221) aufzunehmen;
eine erste Vergussschicht (223), die dazu eingerichtet ist, ein Ende jeder der Hohlfasermembranen (221) zu vergießen, und
eine zweite Vergussschicht (224), die dazu eingerichtet ist, das andere Ende jeder der Hohlfasermembranen (221) zu vergießen,
wobei ein Innenraum (IS, Engl. inner space) zwischen dem mittleren Gehäuse (21) und dem inneren Gehäuse (222) ausgebildet ist,
wobei das Befeuchtungsmodul (2) aufweist:
ein erstes Verpackungselement (23), das durch mechanische Montage mit einem Ende des Befeuchtungsmoduls (2) luftdicht gekoppelt und zwischen der Patrone (22) und dem mittleren Gehäuse (21) angebracht ist, um eine hermetische Abdichtung zwischen der Patrone und dem mittleren Gehäuse (21) auszubilden, so dass die erste Kappe (3) nur mit den Hohlräumen der Hohlfasermembranen (221) in Fluidverbindung stehen kann;
wobei ein erster Außenraum (OS, Engl. outer space) zwischen dem ersten Verpackungselement (23) und der ersten Kappe (3) ausgebildet ist;
einen ersten Dichtungsabschnitt/ein erstes Dichtungsmittel, der/das dazu eingerichtet ist, eine hermetische Abdichtung zwischen dem ersten Verpackungselement (23) und der ersten Vergussschicht (223) auszubilden; und
einen ersten Blockierabschnitt/ein erstes Blockierelement, der/das mit dem ersten Verpackungselement (23) gekoppelt ist, um einen Fließfähigkeitsabstand des ersten Dichtungsabschnitts/Dichtungsmittels zu begrenzen,
der erste Dichtungsabschnitt/das erste Dichtungsmittel aus einem flüssigen Harz gebildet ist, ausgewählt aus der Gruppe bestehend aus flüssigem Polyurethanharz, flüssigem Silikonharz, flüssigem Epoxidharz, flüssigem Elastomerharz und einer Kombination davon, und das auf das erste Verpackungselement aufgebracht und gehärtet wird, nachdem das erste Verpackungselement zwischen der Patrone und dem mittleren Gehäuse angebracht ist, um die hermetische Abdichtung auszubilden, und
der erste Dichtungsabschnitt/das erste Dichtungsmittel in mindestens einem von einem ersten Außenraum (OS) zwischen dem ersten Verpackungselement (23) und der ersten Kappe (3) anhand des ersten Verpackungselements (23) und einem Innenraum (IS) angebracht ist, der auf einer Seite gegenüber dem ersten Außenraum (OS) des ersten Verpackungselements angebracht ist.

2. Befeuchter (1) nach Anspruch 1, wobei
der erste Dichtungsabschnitt (240) ein erstes äußeres Dichtungsmittel (24) umfasst, das in dem ersten Außenraum (OS) angebracht ist,
der erste Blockierabschnitt (260) einen ersten äußeren Blockierabschnitt (26) umfasst, der mit dem ersten Verpackungselement (23) gekoppelt ist, um einen Fließfähigkeitsabstand des ersten äußeren Dichtungsmittels (24) zu begrenzen, und
das erste äußere Dichtungsmittel (24) in einer ersten äußeren Aussparung (232) aufgenommen wird, die zwischen dem ersten äußeren Blockierabschnitt (26) und der ersten Vergussschicht (223) angebracht ist, wobei das erste äußere Dichtungsmittel (24) dazu eingerichtet ist, die hermetische Abdichtung zwischen dem ersten Verpackungselement (23) und der ersten Vergussschicht (223) auszubilden.

3. Befeuchter (1) nach Anspruch 1, wobei
der erste Dichtungsabschnitt (240) ein erstes inneres Dichtungsmittel (25) umfasst, das in dem Innenraum (IS) angebracht ist,
der erste Blockierabschnitt (260) einen ersten inneren Blockierabschnitt (27) umfasst, der mit dem ersten Verpackungselement (23) gekoppelt ist, um einen Fließfähigkeitsabstand des ersten inneren Dichtungsmittels (25) zu begrenzen, und
das erste innere Dichtungsmittel (25) in einer ersten inneren Aussparung (233) aufgenommen wird, die zwischen dem ersten inneren Blockierabschnitt (2) und der ersten Vergussschicht (223) angebracht ist, wobei das erste innere Dichtungsmittel (25) dazu eingerichtet ist, die hermetische Abdichtung zwischen dem ersten Verpackungselement (23) und der ersten Vergussschicht (223) auszubilden.

4. Befeuchter (1) nach Anspruch 1, wobei
der erste Dichtungsabschnitt (240) ein erstes äußeres Dichtungsmittel (24) umfasst, das in dem ersten Außenraum (OS) angebracht ist, und ein erstes inneres Dichtungsmittel (25) umfasst, das in dem Innenraum (IS) angebracht ist,
der erste Blockierabschnitt (260) einen ersten äußeren Blockierabschnitt (26) umfasst, der mit dem ersten Verpackungselement (23) gekoppelt ist, um einen Fließfähigkeitsabstand des ersten äußeren Dichtungsmittels (24) zu begrenzen, und einen ersten inneren Blockierabschnitt (27) umfasst, der mit dem ersten Verpackungselement (23) gekoppelt ist, um einen Fließfähigkeitsabstand des ersten inneren Dichtungsmittels (25) zu begrenzen, und
das erste äußere Dichtungsmittel (24) in einer ersten äußeren Aussparung (232) aufgenommen wird, die zwischen dem ersten äußeren Blockierabschnitt (26) und der ersten Vergussschicht (223) angebracht ist, wobei das erste äußere Dichtungsmittel (24) dazu eingerichtet ist, die hermetische Abdichtung zwischen dem ersten Verpackungselement (23) und der ersten Vergussschicht (223) auszubilden, und das erste innere Dichtungsmittel in einer ersten inneren Aussparung (233) aufgenommen wird, die zwischen dem ersten inneren Blockierabschnitt (27) und der ersten Vergussschicht (223) angebracht ist, wobei das erste innere Dichtungsmittel dazu eingerichtet ist, die hermetische Abdichtung zwischen dem ersten Verpackungselement (23) und der ersten Vergussschicht (223) auszubilden.

5. Befeuchter (1) nach Anspruch 2 oder 4, wobei der erste äußere Blockierabschnitt (26) ein erstes äußeres Blockierelement (261) umfasst, das von dem ersten Verpackungselement (23) in Richtung des ersten Außenraums (OS) vorsteht, und ein erstes äußeres Trennelement (262) umfasst, das von dem ersten Verpackungselement (23) in Richtung der ersten Vergussschicht (223) vorsteht.

6. Befeuchter für Brennstoffzellen nach Anspruch 1,
wobei das erste Verpackungselement (23) eine erste innere Aussparung (233) umfasst, die dazu eingerichtet ist, den ersten Dichtungsabschnitt/das erste Dichtungsmittel aufzunehmen, ein erstes Blockierelement (236) umfasst, das an einer Seite der ersten inneren Aussparung (233) angebracht ist, und ein erstes Trennelement (237) umfasst, das an der anderen Seite der ersten inneren Aussparung (233) angebracht ist,
wobei das erste Blockierelement (236) in Richtung des Innenraums (IS) vorsteht, so dass es eine größere Länge als die erste innere Aussparung (233) aufweist, und
wobei sich der erste Dichtungsabschnitt/das erste Dichtungsmittel in der ersten inneren Aussparung (233) befindet, wobei der erste Dichtungsabschnitt/das erste Dichtungsmittel dazu eingerichtet ist, eine hermetische Abdichtung zwischen dem ersten Blockierelement (236) und der ersten Vergussschicht (223) auszubilden.

7. Befeuchter (1) nach Anspruch 6, wobei
das erste Dichtungsmittel (6) einen ersten Dichtungsmittelkörper (61) umfasst, der in der ersten inneren Aussparung (233) angebracht ist, und ein erstes Vorsprungsdichtungsmittel (62) umfasst, das von dem ersten Dichtungsmittelkörper (61) vorsteht, wobei das erste Vorsprungsdichtungsmittel dazu eingerichtet ist, die hermetische Abdichtung zwischen dem ersten Blockierelement (236) und der ersten Vergussschicht (223) auszubilden.

8. Befeuchter (1) nach Anspruch 7, wobei das erste Vorsprungsdichtungsmittel (62) dadurch ausgebildet wird, dass das erste Dichtungsmittel (6) so aufgetragen wird, dass es ein größeres Volumen als die erste innere Aussparung (233) aufweist und von der ersten Vergussschicht (223) gedrückt wird.

9. Befeuchter (1) nach Anspruch 7, wobei
die erste Vergussschicht (223) ein erstes Druckelement (2231) umfasst, das in Richtung des ersten Verpackungselements (23) vorsteht,
das erste Dichtungsmittel (6) eine erste Aufnahmeaussparung (63) umfasst, die dazu eingerichtet ist, das erste Druckelement (2231) aufzunehmen,
der erste Dichtungsmittelkörper (61) ein erstes Körperkontaktelement (611) umfasst, das so konfiguriert ist, dass es eine Seite des ersten Druckelements (2231) kontaktiert, das in der ersten Aufnahmeaussparung (63) aufgenommen ist, und
das erste Vorsprungsdichtungsmittel (62) ein erstes Vorsprungskontaktelement (621) umfasst, das dazu eigerichtet ist, dass es die andere Seite des ersten Druckelements (2231) zu kontaktieren, das in der ersten Aufnahmeaussparung (63) aufgenommen ist.

10. Befeuchter (1) nach Anspruch 9, wobei das erste Druckelement (2231) in die erste innere Aussparung (233) eingesetzt wird, indem das erste Trennelement (237) elastisch zusammengedrückt wird.

11. Befeuchter (1) nach Anspruch 1 oder 6, wobei
ein erster gedrückter Flügel (28) mit dem ersten Verpackungselement (23) gekoppelt ist, und der erste gedrückte Flügel (28) von dem ersten Verpackungselement (23) in Richtung der ersten Vergussschicht (223) vorsteht, wobei der erste gedrückte Flügel (28) infolge des Drückens durch die erste Vergussschicht (223) elastisch zusammengedrückt wird.

12. Befeuchter (1) nach Anspruch 1 oder 6, wobei
das mittlere Gehäuse (21) eine Stützaussparung (214) umfasst, die so konfiguriert ist, dass mindestens ein Teil eines Endes des ersten Verpackungselements (23) darin eingesetzt werden kann, und
das erste Verpackungselement (23) eine erste Fangaussparung (235) umfasst, die so konfiguriert ist, dass mindestens ein Teil eines Endes des mittleren Gehäuses (21) darin eingesetzt werden kann.

13. Befeuchter (1) nach Anspruch 12, wobei das mittlere Gehäuse (21) ein Stützelement (217) umfasst, das dazu eingerichtet ist, eine Außenfläche des ersten Verpackungselements (23) zu stützen.

14. Befeuchter (1) nach Anspruch 1 oder 6, wobei das Befeuchtungsmodul (2) ferner ein erstes Verstärkungselement (5) umfasst, das in mindestens einen Teil des ersten Verpackungselements (23) eingesetzt ist, wobei das Verstärkungselement (5) eine größere Härte als das erste Verpackungselement (23) aufweist.

## Revendications

1. Humidificateur (1) pour piles à combustible, l'humidificateur (1) comprenant :
un module d'humidification (2) configuré pour humidifier du gaz sec fournit depuis l'extérieur en utilisant du gaz humide déchargé d'un empilement de piles à combustible ; et
un premier capuchon (3) couplé à une extrémité du module d'humidification (2), dans lequel :
le module d'humidification (2) comprend :
un boîtier médian (21) ouvert à ses extrémités opposées ; et
au moins une cartouche (22) disposée dans le boîtier médian (21), la cartouche (22) comprenant une pluralité de membranes à fibres creuses (221),
la cartouche (22) comprend :
un boîtier interne (222) ouvert à ses extrémités opposées, le boîtier interne (222) étant configuré pour recevoir les membranes à fibres creuses (221) ;
une première couche d'enrobage (223) configurée pour enrober une extrémité de chacune des membranes à fibres creuses (221), et
une deuxième couche d'enrobage (224) configurée pour enrober l'autre extrémité des membranes à fibres creuses (221),
moyennant quoi un espace interne (IS) est formé entre le boîtier médian (21) et le boîtier interne (222),
le module d'humidification (2) comprend :
un premier élément de garniture (23) couplé, de manière étanche à l'air, à une extrémité du module d'humidification (2) par le biais d'un ensemble mécanique et disposé entre la cartouche (22) et le boîtier médian (21) pour former un joint d'étanchéité hermétique entre la cartouche et le boîtier médian (21) de sorte que le premier capuchon (3) peut communiquer de manière fluidique uniquement avec les creux des membranes à fibres creuses (221) ;
moyennant quoi un premier espace externe (OS) est formé entre le premier élément de garniture (23) et le premier capuchon (3) ;
un(e) première/premier partie /produit d'étanchéité configuré(e) pour former un joint d'étanchéité hermétique entre le premier élément de garniture (23) et la première couche d'enrobage (223) ; et
un(e) première/ premier partie/élément de blocage couplé(e) au premier élément de garniture (23) afin de limiter une distance d'écoulement de la (du) premier(e) partie /produit d'étanchéité,
la (le) première/premier partie /produit d'étanchéité étant réalisé(e) avec une résine liquide sélectionnée pour le groupe comprenant une résine de polyuréthane liquide, une résine de silicone liquide, une résine époxy liquide, une résine élastomère liquide et leur combinaison, appliquée sur le premier élément de garniture et durcie après que le premier élément de garniture a été disposé entre la cartouche et le boîtier médian pour former le joint d'étanchéité hermétique, et
la (le) première/premier partie /produit d'étanchéité est disposé(e) dans au moins l'un d'un premier espace externe (OS) entre le premier élément de garniture (23) et le premier capuchon (3) sur la base du premier élément de garniture (23) et un espace interne (IS) disposé sur un côté opposé au premier espace externe (OS) du premier élément de garniture.

2. Humidificateur (1) selon la revendication 1, dans lequel :
la première partie d'étanchéité (240) comprend un premier produit d'étanchéité externe (24) disposé dans le premier espace externe (OS),
la première partie de blocage (260) comprend une première partie de blocage externe (26) couplée au premier élément de garniture (23) pour limiter une distance d'écoulement du premier produit d'étanchéité externe (24), et
le premier produit d'étanchéité externe (24) est reçu dans un premier évidement externe (232) disposé entre la première partie de blocage externe (26) et la première couche d'enrobage (223), le premier produit d'étanchéité externe (24) étant configuré pour former le joint d'étanchéité hermétique entre le premier élément de garniture (23) et la première couche d'enrobage (223).

3. Humidificateur (1) selon la revendication 1, dans lequel :
la première partie d'étanchéité (240) comprend un premier produit d'étanchéité interne (25) disposé dans l'espace interne (IS),
la première partie de blocage (260) comprend une première partie de blocage interne (27) couplée au premier élément de garniture (23) pour limiter une distance d'écoulement du premier produit d'étanchéité (25), et
le premier produit d'étanchéité interne (25) est reçu dans un premier évidement interne (233) disposé entre la première partie de blocage interne (27) et la première couche d'enrobage (223), le premier produit d'étanchéité interne (25) étant configuré pour former le joint d'étanchéité hermétique entre le premier élément de garniture (23) et la première couche d'enrobage (223).

4. Humidificateur (1) selon la revendication 1, dans lequel :
la première partie d'étanchéité (240) comprend un premier produit d'étanchéité externe (24) disposé dans le premier espace externe (OS) et un premier produit d'étanchéité interne (25) disposé dans l'espace interne (IS),
la première partie de blocage (260) comprend une première partie de blocage externe (26) couplée au premier élément de garniture (23) pour limiter une distance d'écoulement du premier produit d'étanchéité externe (24) et une première partie de blocage interne (27) couplée au premier élément de garniture (23) pour limiter une distance d'écoulement du premier produit d'étanchéité interne (25), et
le premier produit d'étanchéité externe (24) est reçu dans un premier évidement externe (232) disposé entre la première partie de blocage externe (26) et la première couche d'enrobage (223), le premier produit d'étanchéité externe (24) étant configuré pour former le joint d'étanchéité hermétique entre le premier élément de garniture (23) et la première couche d'enrobage (223), et le premier produit d'étanchéité interne est reçu dans un premier évidement interne (233) disposé entre la première partie de blocage interne (27), et la première couche d'enrobage (223), le premier produit d'étanchéité interne étant configuré pour former le joint d'étanchéité hermétique entre le premier élément de garniture (23) et la première couche d'enrobage (223).

5. Humidificateur (1) selon la revendication 2 ou 4, dans lequel la première partie de blocage externe (26) comprend un premier élément de blocage externe (261) faisant saillie du premier élément de garniture (23) vers le premier espace externe (OS) et un premier élément de séparation externe (262) faisant saillie du premier élément de garniture (23) vers la première couche d'enrobage (223).

6. Humidificateur pour piles à combustible selon la revendication 1,
dans lequel le premier élément de garniture (23) comprend un premier évidement interne (233) configuré pour recevoir la (le) première/premier partie /produit d'étanchéité, un premier élément de blocage (236) disposé d'un côté du premier évidement interne (233), et un premier élément de séparation (237) disposé de l'autre côté du premier évidement interne (233),
dans lequel le premier élément de blocage (236) fait saillie vers l'espace interne (IS) pour avoir une plus grande longueur que le premier évidement interne (233), et
dans lequel la (le) première/premier partie/produit d'étanchéité est positionné(e) dans le premier évidement interne (233), la (le) première/premier partie/produit d'étanchéité étant configuré(e) pour former un joint d'étanchéité hermétique entre le premier élément de blocage (236) et la première couche d'enrobage (223).

7. Humidificateur (1) selon la revendication 6, dans lequel :
le premier produit d'étanchéité (6) comprend un premier corps de produit d'étanchéité (61) disposé dans le premier évidement interne (233) et un premier produit d'étanchéité en saillie (62) faisant saillie du premier corps de produit d'étanchéité (61), le premier produit d'étanchéité en saillie étant configuré pour former le joint d'étanchéité hermétique entre le premier élément de blocage (236) et la première couche d'enrobage (223).

8. Humidificateur (1) selon la revendication 7, dans lequel le premier produit d'étanchéité en saillie (62) est formé suite à l'application du premier produit d'étanchéité (6) afin d'avoir un plus grand volume que le premier évidement interne (233) et à la pression par la première couche d'enrobage (223).

9. Humidificateur (1) selon la revendication 7, dans lequel :
la première couche d'enrobage (223) comprend un premier élément de pression (2231) faisant saillie vers le premier élément de garniture (23),
le premier produit d'étanchéité (6) comprend un premier évidement de réception (63) configuré pour recevoir le premier élément de pression (2231),
le premier corps de produit d'étanchéité (61) comprend un premier élément de contact de corps (611) configuré pour être en contact avec un côté du premier élément de pression (2231) reçu dans le premier évidement de réception (63), et
le premier produit d'étanchéité en saillie (62) comprend un premier élément de contact en saillie (621) configuré pour être en contact avec l'autre côté du premier élément de pression (2231) reçu dans le premier évidement de réception (63).

10. Humidificateur (1) selon la revendication 9, dans lequel le premier élément de pression (2231) est inséré dans le premier évidement interne (233) suite à la compression élastique du premier élément de séparation (237).

11. Humidificateur (1) selon la revendication 1 ou 6, dans lequel :
une première aile pressée (28) est couplée au premier élément de garniture (23), et
la première aile pressée (28) fait saillie du premier élément de garniture (23) vers la première couche d'enrobage (223), la première aile pressée (28) étant élastiquement comprimée suite à la pression par la première couche d'enrobage (223).

12. Humidificateur (1) selon la revendication 1 ou 6, dans lequel :
le boîtier médian (21) comprend un évidement de support (214) configuré pour permettre à au moins une partie d'une extrémité du premier élément de garniture (23) d'y être insérée, et
le premier élément de garniture (23) comprend un premier évidement de retenue (235) configuré pour permettre à au moins une partie d'une extrémité du boîtier médian (21) d'y être insérée.

13. Humidificateur (1) selon la revendication 12, dans lequel le boîtier médian (21) comprend un élément de support (217) configuré pour supporter une surface externe du premier élément de garniture (23).

14. Humidificateur (1) selon la revendication 1 ou 6, dans lequel le module d'humidification (2) comprend en outre un premier élément de renforcement (5) inséré dans au moins une partie du premier élément de garniture (23), l'élément de renforcement (5) ayant une dureté supérieure à la dureté du premier élément de garniture (23).
